(19) **Europäisches Patentamt / European Patent Office / Office européen des brevets**

(11) **EP 2 218 616 B1**

(12) # EUROPEAN PATENT SPECIFICATION

(45) Date of publication and mention
of the grant of the patent:
**22.08.2012 Bulletin 2012/34**

(51) Int Cl.:
**B60S 1/08** (2006.01)  **G01N 27/22** (2006.01)

(21) Application number: **10164460.7**

(22) Date of filing: **11.12.2006**

(54) **Rain sensor with fractal capacitor(s)**

Regensensor mit fraktalem(n) Kondensator(en)

Détecteur de pluie à condensateur(s) à géométrie fractale

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **10.01.2006 US 757479 P
27.01.2006 US 340869
27.01.2006 US 340847
27.01.2006 US 340859
27.01.2006 US 340864**

(43) Date of publication of application:
**18.08.2010 Bulletin 2010/33**

(62) Document number(s) of the earlier application(s) in
accordance with Art. 76 EPC:
**06845182.2 / 1 971 507**

(73) Proprietor: **GUARDIAN INDUSTRIES CORP.
Auburn Hills,
Michigan 48326-1714 (US)**

(72) Inventor: **Veerasamy, Vijayen S.
Ann Arbor, MI 48103 (US)**

(74) Representative: **Hess, Peter K. G.
Bardehle Pagenberg
Prinzregentenplatz 7
81675 München (DE)**

(56) References cited:
**EP-A- 0 192 416      DE-A1- 3 937 605
DE-U1- 9 403 135      US-A1- 2003 080 871
US-A1- 2004 007 759**

• **HIRAD SAMAVATI ET AL: "Fractal Capacitors"
IEEE JOURNAL OF SOLID-STATE CIRCUITS,
IEEE SERVICE CENTER, PISCATAWAY, NJ, US,
vol. 33, no. 12, December 1998 (1998-12), pages
2035-2041, XP011060899 ISSN: 0018-9200**

EP 2 218 616 B1

**Description**

This invention relates to a system and/or method for sensing the presence of rain and/or the disturbances or presence of other materials on a sheet(s) of glass such as a vehicle windshield, backlite, or sunroof. In certain example nonlimiting embodiments, at least one sensing capacitor is supported by a window, directly or indirectly, such as a vehicle windshield, the capacitor(s) having a field that is affected by moisture (e.g., rain) on a surface of the window. According to the invention, one or more of the sensing capacitor(s) has a-fractal geometry.

BACKGROUND AND SUMMARY OF EXAMPLE EMBODIMENTS OF THE INVENTION

The presence of moisture (e.g., rain or condensation) on vehicle windshields and/or backlites may create hazardous driving conditions for drivers, passengers, and pedestrians if not promptly removed. Wiper blades are a well-known, common way to remove such materials and reduce the hazards of driving during dangerous conditions. Rain sensors have been developed to detect the presence of moisture (e.g., rain or other condensation) on a vehicle windshield, and to turn on and off wipers, as necessary, when such moisture is detected. Automatically detecting rain, sleet, fog, and the like, and taking appropriate action- for example, turning on/off wiper blades at a proper speed - potentially reduces distractions to the driver, allowing the driver to better concentrate on the road ahead. However, inappropriately turning on/off wipers or failing to actuate wipers when moisture is present may also create hazardous conditions. Moreover, such systems are also susceptible to "dirt" distractions which may cause false reads/wipes when dirt is on the windshield.

Certain conventional rain sensors are based on an electro-optical concept. According to certain such techniques, rain droplets are sensed solely by measuring the change in the total internal reflection of a light beam off the glass-air interface. Other electro-optical techniques have attempted to analyze the brightness of a section of a window "image" to detect rain droplets or fog on a window. However, these optical techniques have limited sensing areas, are fairly expensive, and may result in erroneous detection indications due to the use of optical imaging as the sole detection method. Document US 2003/080871 A1 relates to a sensor unit for detecting the wetting of a window. The sensor unit comprises a rain sensor sensitive to moisture on an external surface of window, including a sensing capacitor with two capacitor electrodes being electrically separated from each other and being arranged in a spiral shape. Another rain sensor with capacitor electrodes being arranged in a spiral shape is described in DE 9403135U.

U.S. Patent No. 6,373,263 to Netzer teaches using capacitive rain sensors and reading the differential current between two capacitors on the windshield. Unfortunately, Netzer's system also has significant disadvantages. For example, Netzer's system may be subject to certain detrimental effects of electromagnetic interference (EMI), as well as interference from other sources. For instance, as external bodies (e.g., human hand, radio waves, etc.) interfere with the function of the capacitors, the charges of the excitation and receiver electrodes may uncontrollably vary in Netzer, thereby leading to false alarms or detections and thus possibly produce false wipes and/or detections. Netzer's system is also subject to possible false reads caused by drastic temperature changes in view of the reference capacitor system utilized by Netzer, where Netzer's reference capacitor has a different geometry/shape/size than the sensing capacitor.

Thus, it will be appreciated that there exists a need in the art for a moisture (e.g., rain) sensor that is efficient in operation and/or detection. For example and without limitation, it may be desirable to provide a rain sensor that overcomes one or more of the above-discussed disadvantages. The above object is solved by a rain sensor of claim 1.

In this invention, capacitors are formed based on a fractal pattern. For example and without limitation, one or more of the capacitors may be formed based on a fractal pattern, such as a Hilbert fractal pattern. Other capacitive fractal patterns may also be used, including but not limited to a Cantor set. These fractal structures maximize or enlarge the periphery and thus result in a large capacitance for a given area. The use of two dimensional fractal designs also allows the sensor to occupy a small amount of physical space on the window while at the same time being electrically larger than its physical size. The concentration of lateral flux in a fractal geometry may also allow the sensor to detect rain/water not necessarily spread over the actual physical area of the sensor in certain example embodiments of this invention. Furthermore, in its higher iteration(s) a fractal capacitor(s) has an attribute of being its own Faraday shield or quasi-Faraday shield which can reduce adverse affects of EMI interference or the like. Also; in certain example embodiments, the rain sensor may be electrically connected to a Local Interconnect Bus of the vehicle.

BRIEF DESCRIPTION OF THE DRAWINGS

These and other features and advantages will be better and more completely understood by reference to the following detailed description of exemplary illustrative embodiments in conjunction with the drawings, of which:

FIGURE 1 (a) is a block diagram of components of an exemplary rain sensor.

FIGURE 1(b) is a cross sectional view of a rain sensor, that may use the features of Fig. 1(a) and/or one or more of Figs. 2-12.

FIGURE 1(c) is a cross sectional view of a rain sensor, that may use the features of Fig. 1(a) and/or one or more of Figs. 2-12.

FIGURE 1 (d) is a cross sectional view of a rain sensor, that may use the features of Fig. 1(a) and/or one or more of Figs. 2-12.

FIGURE 1 (e) is a cross sectional view of a rain sensor, that may use the features of Fig. 1 (a) and/or one or more of Figs. 2-12.

FIGURE 1(f) is a cross sectional view of a rain sensor, that may use the features of Fig. 1(a) and/or one or more of Figs. 2-12.

FIGURE 2A is an exemplary optimized pattern for a quadrant capacitive array based on Hilbert fractals, where such capacitors may be provided on the window as a sensor array in one or more of Figs. 1(a)-1(f) and 4-12 for example.

FIGURE 2B is another exemplary optimized pattern for a quadrant capacitive array, where such capacitors may be provided on the window as a sensor array in one or more of Figs. 1(a)-1(f) and 4-12 for example.

FIGURE 3 is an enlarged picture of yet another exemplary quadrant capacitive array, where such capacitors may be provided on the window as a sensor array in one or more of Figs. 1(a)-1(f) and 4-12 for example.

FIGURE 4 is an example circuit diagram including exemplary circuitry used for a write clock pulse in readout electronics, for use in one or more of the embodiments of Figs. 1(a)-1(f) and 5-12 for example.

FIGURE 5 is an example circuit diagram including exemplary circuitry used for an erase clock pulse in readout electronics, for use in one or more of Figs. 1(a)-1(f), 4 and 6-12 for example.

FIGURE 6 is an exemplary timing diagram derived from readout circuitry of Figs. 4-5.

FIGURE 7 is an exemplary flowchart or state diagram showing how autocorrelation and cross-correlation data may be used to control wipers, which may be used in conjunction with one of more of Figs. 1-6 and 8-12.

FIGURE 8 is an exemplary flowchart showing how autocorrelation and cross-correlation data can be used to control wipers, which may be used in conjunction with one of more of Figs. 1-7 and 9-12.

FIGURE 9 is an exemplary stylized view of how a rain droplet might travel across a windshield.

FIGURE 10 is an graph plotting example experimentally-obtained maximum values of non-normalized autocorrelations for different disturbances.

FIGURE 11A is an example experimentally-obtained autocorrelation snapshot indicative of heavy rain.

FIGURE 11B is an example experimentally-obtained autocorrelation snapshot indicative of a light mist.

FIGURE 11C is an example experimentally-obtained autocorrelation snapshot indicative of CB radio interference.

FIGURE 11D is an example experimentally-obtained autocorrelation snapshot indicative of a grounded body with a voltage.

FIGURE 12A is an exemplary correlation matrix indicative of light rain.

FIGURE 12B is an exemplary correlation matrix indicative of heavy rain.

FIGURE 13 is an example of autocorrelation according to an example embodiment of this invention.

FIGURE 14 is a chart setting forth example cross-correlation data from capacitors C1, C2.

FIGURE 15 is a crosscorrelation graph, plotting crosscorrelation values versus time lags (the time lags are in terms of microseconds in the time domain), using certain signals from Fig. 14.

FIGURE 16 is a crosscorrelation graph, plotting crosscorrelation values versus time lags (the time lags are in terms of microseconds in the time domain), using certain signals from Fig. 14.

FIGURE 17 is a crosscorrelation graph, plotting crosscorrelation values versus time lags (the time lags are in terms of microseconds in the time domain), using certain signals from Fig. 14.

FIGURE 18 is a crosscorrelation graph, plotting crosscorrelation values versus time lags (the time lags are in terms of microseconds in the time domain), using certain signals from Fig. 14.

FIGURE 19 is a crosscorrelation graph, plotting crosscorrelation values versus time lags (the time lags are in terms of microseconds in the time domain), using certain signals from Fig. 14.

FIGURE 20 is a crosscorrelation graph, plotting crosscorrelation values versus time lags (the time lags are in terms of microseconds in the time domain), using certain signals from Fig. 14.

FIGURE 21 is a crosscorrelation graph, plotting crosscorrelation values versus time lags (the time lags are in terms of microseconds in the time domain), using certain signals from Fig. 14.

FIGURE 22 is a crosscorrelation graph, plotting crosscorrelation values versus time lags (the time lags are in terms of microseconds in the time domain), using certain signals from Fig. 14.

FIGURE 23 is a crosscorrelation graph, plotting crosscorrelation values versus time lags (the time lags are in terms of microseconds in the time domain), using certain signals from Fig. 14.

FIGURE 24 is a crosscorrelation graph, plotting crosscorrelation values versus time lags (the time lags are in terms of microseconds in the time domain), using certain signals from Fig. 14.

FIGURE 25 is a block diagram illustrating circuitry and/or processing of signals where a sensing capacitor (e.g., C1) is present, including sigma-delta modulation.

FIGURE 26 is a block diagram illustrating circuitry and/or processing of signals where a plurality of capacitors (e.g., C1-C4) are present, including sigma-delta modulation.

FIGURE 27 is a block diagram illustrating sigma-delta modulation; this processing being performed in circuitry, firmware and/or software.

FIGURES 28(a) AND 28(b) are schematic diagrams illustrating advantages of using floating electrodes for sensing capacitors (e.g., C1-C4)

DETAILED DESCRIPTION OF EXAMPLE EMBODIMENTS OF THE INVENTION

Referring now more particularly to the accompanying drawings in which like reference numerals indicate like parts throughout the several views.

A rain sensor system is provided and includes capacitance-based detection which translates a physical input signal (e.g., the presence of a drop of water on a windshield, or the like) into a digital electrical voltage signal which is received and interpreted by a software program(s) or circuit(s) that decides whether windshield wipers should be activated, and, if so, optionally their proper speed. Thus, capacitive coupling is used to detect water and/or other material in the exterior surface of a window such as a vehicle windshield, sunroof, and/or backlite. It will be appreciated that computational methods may be performed by hardware or a combination of hardware and software in different example embodiments of this invention. No reference capacitance or capacitor may be needed (i.e., no compensation capacitor is needed).

The system may take advantage of a permittivity equation, which gives a physical quantity that describes how an electric field affects and is affected by a medium. An example basic permittivity equation is:

$$D = \varepsilon_0 E + P,$$

where $D$ is electrical flux, $\varepsilon_0$ is the dielectric constant of a vacuum, $E$ is an electrical field (e.g., the voltage setup between plates or electrodes divided by distance, or V/m), and $P$ is polarization. Polarization P can be further described mathematically as:

$$P = \varepsilon_r \varepsilon_0 E,$$

where $\varepsilon_r$ is relative permittivity (e.g., the dielectric constant of water, ice, dirt or anything else that could be on an exterior surface of a window such as a windshield). In general, a high value of $\varepsilon_i$ will correspond to high polarizability. The permittivity of glass is approximately 8, and the permittivity of water is approximately 85. By substitution and factorization, then, the permittivity equation can be rewritten as:

$$D = \varepsilon_0 (\varepsilon_r + 1) E.$$

In this form, it will be appreciated that $D$ is the response to excitation $E$.

Capacitance $C$ is given by $C=Q/V$, where Q is the charge and V is the potential, in volts. Additionally, $C=\Phi/V$, where $\Phi$ is the electric flux associated with charge Q. By Gauss' Law:

$$\Phi = \oint_S E \cdot dA,$$

where dA is the area of a differential square on the closed surface $S$. By substitution, then, it becomes clear that capacitance is related to potential difference:

$$C = \int DdA / V.$$

These equations form the basis of an example technique for measuring the interaction of water on glass by using a sensor with a capacitive array to probe above the window (e.g., glass). In particular, data from a sensor including at least one, or two or more, capacitor(s) (e.g., C1, C2, C3, etc.) may be used to detect whether moisture (e.g., rain, or the like) is present on an exterior surface of a window such as a vehicle windshield or backlite. The above equations illustrate that the presence of water on the surface of a window can affect the capacitance of an appropriately positioned sensing capacitor.

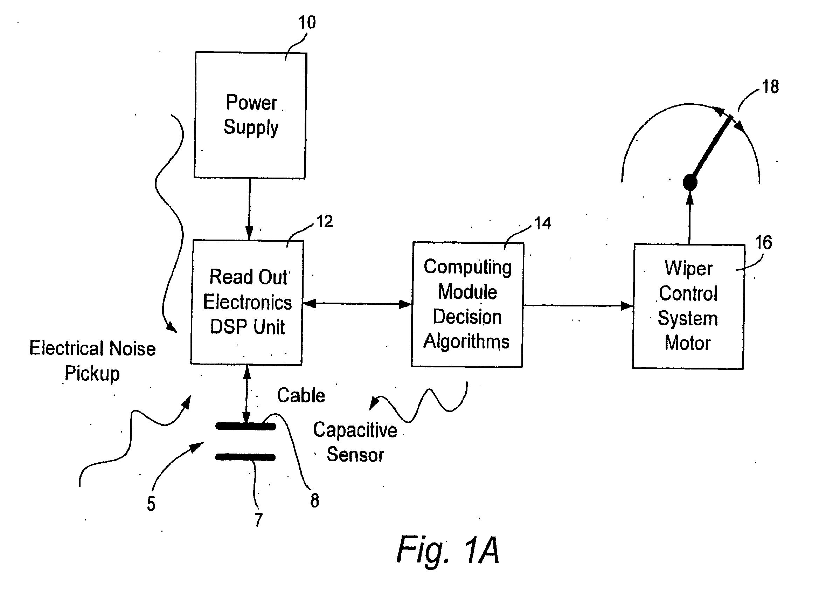

Fig. 1(a) is a block diagram of example components of a moisture (e.g., rain) sensor. Power supply 10 is connected to readout electronics 12 which may include one or more of hardware, firmware, and/or software. As will be described in greater detail below, the sensor includes one or more capacitors so as to make up a capacitive sensor 5 in certain example embodiments. Capacitors each having a pair of approximately coplanar electrodes arranged in a fractal pattern are used in the sensor according to the invention. The a fractal pattern may be divided into a capacitive array. While the window may be flat or curved, the capacitor electrodes of a given sensing capacitor (C1, C2, C3 and/or C4) are substantially coplanar with each other and supported by the flat or curved window, even though there may be some small amount of curvature of the glass. Data from and/or related to the sensing capacitor(s) of the capacitive sensor 5 is received and read by readout electronics 12 which may be made up of one or more of hardware, firmware and/or software. Readout electronics 12 pick up electrical noise and convert the same to digital signal(s). This digital signal(s) is passed to computing module 14 (which may be made up of one or more of hardware, firmware and/or software) which determines what action the wipers should take. For example, the wipers might initiate a single wipe, low-speed wipes, high-speed wipes, etc., based on the data analyzed from and/or related to the capacitive sensor. The wipers also may be caused to turn off, slow/increase the speed at which they are wiping, etc., based on the data analyzed from and/or related to the capacitive sensor. Wiper control system motor 16 receives instructions from computing module 14 and directs wipers 18 to take the appropriate action.

The capacitive sensor 5 interfaces with a Local Interconnect Bus (LIN bus) of a vehicle. A LIN bus (not shown) typically is a serial bus to which slave devices in an automobile are connected. A LIN bus typically executes a handshake (s) with slave devices to ensure that they are, for example, connected and functional. Additionally, a LIN bus may provide other information to slave devices, such as, for example, the current time.

The capacitive sensor 5 includes a plurality of capacitors in the form of any suitable array.

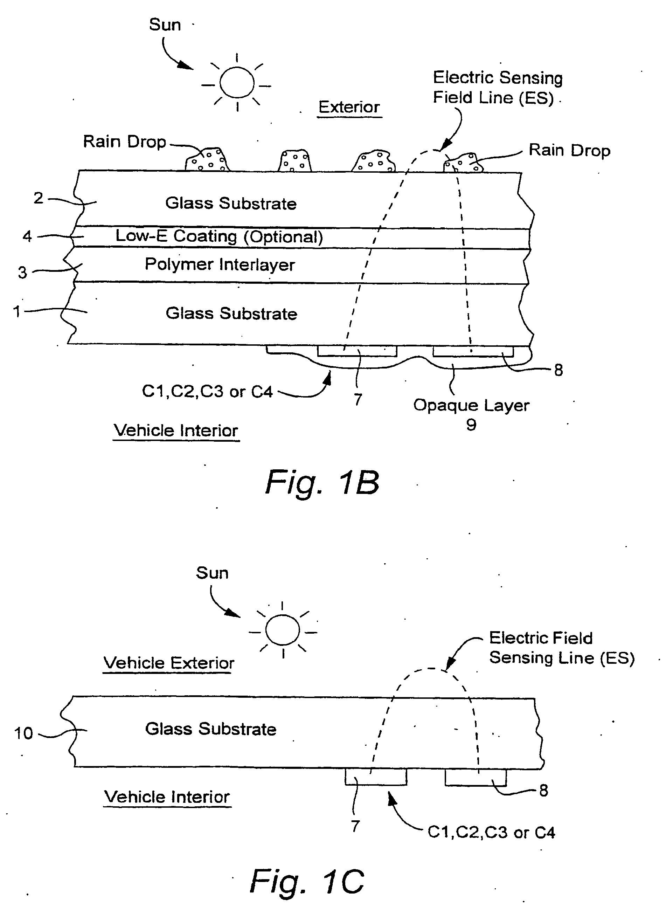

Fig. 1(b) is a cross-sectional view of a vehicle window including a moisture sensor. A windshield of the vehicle includes inner glass substrate 1 and outer glass substrate 2 that are laminated together via a polymer-inclusive interlayer 3 of a material such as polyvinyl butyral (PVB) or the like. An optional low-e (low emissivity) coating 4 may be provided on the inner surface of the exterior glass substrate 2 (or even on the surface of substrate 1). A low-E coating 4 typically includes at least one thin IR reflecting layer of a material such as silver, gold or the like sandwiched between at least first and second dielectric layers of material such as silicon nitride, tin oxide, zinc oxide, or the like. Example low-E coatings 4, for purposes of example and without limitation, are described in U.S. Patent Nos. 6,686,050, 6,723,211, 6,782,718, 6,749,941, 6,730,352, 6,802,943, 4,782,216, 3,682,528, and 6,936,347.

Fig. 1 (b) illustrates an example capacitor of the capacitive sensor. While the capacitive sensor of Fig. 1(a) typically includes a plurality of capacitors in an array, only one capacitor of the sensor is shown in Fig. 1(b) for purposes of simplicity. The other capacitors are similar in cross section to the one shown in Fig. 1(b) in certain example embodiments of this invention. The example capacitor (C1, C2, C3 or C4) of the capacitive sensor shown in Fig. 1(b) includes a pair of spaced apart coplanar or substantially coplanar capacitor electrodes 7 and 8. The electrodes 7 and 8 are of a conductive material that may be printed or otherwise formed on the window. For example, the capacitor electrodes 7 and 8 of the sensing capacitor may be made of or include silver, ITO (indium tin oxide), or other suitable conductive material. The capacitor shown in Fig. 1(b) is affected by a rain droplet on the exterior surface of the window because electric field Es of the capacitor extends to or beyond the exterior surface of the window as shown in Fig. 1(b) and thus can interact with the rain droplet or other material on the window's exterior surface. Signals received from and/or relating to the sensing capacitor(s) and analysis thereof is described herein.

In Fig. 1 (b), an opaque insulating layer (e.g., black frit or enamel, or the like) 9 is provided on the window over the electrodes 7 and 8 in order to shield the electrodes 7, 8 from the view of a passenger(s) sitting inside the vehicle. Thus, it will be appreciated that the opaque layer 9 is only provided on a small portion of the window, including in the area where the capacitive array of the rain sensor's array of capacitors is located. The rain sensor's capacitive array and thus the opaque layer 9 may be located on a vehicle windshield in an area proximate the rear-view mirror mounting bracket. The opaque layer 9 (e.g., black frit or enamel) may contact the fractal pattern of the capacitor electrodes 7, 8 directly because the layer 9 is not conductive. However, even if a black frit layer 9 were conductive (which is possible), its dielectric constant is close to that of water so that it will not adversely interfere with the capturing of data from and/or related to the capacitors C1-C4 and associated analysis:

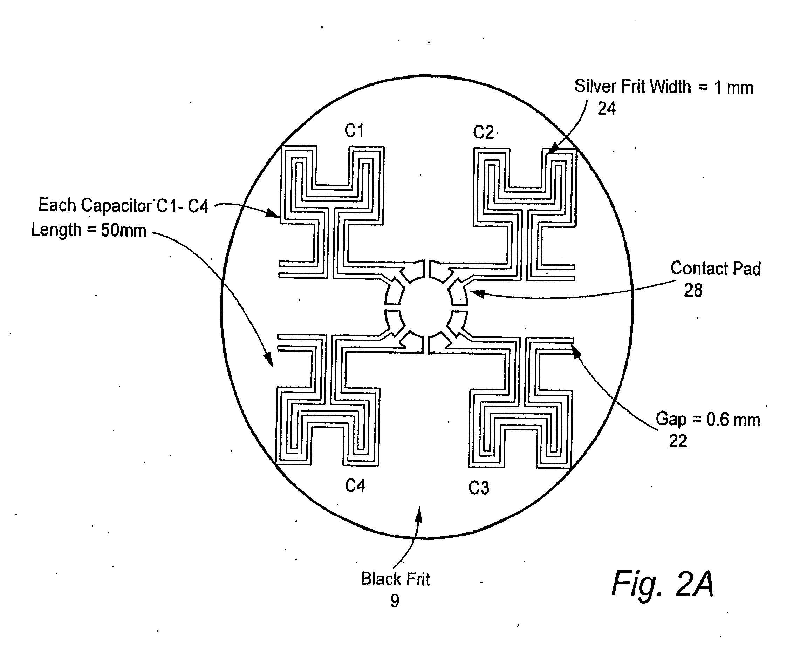

Fig. 2A is a top or plan view illustrating an example capacitive sensor array including four capacitors C1, C2, C3 and C4. Each of these capacitors C1, C2, C3 and C4 includes first and second spaced apart coplanar capacitor electrodes 7 and 8 as shown in Fig. 1(b) (or any of Figs. 1(c)-1(f)). The capacitor electrodes 7 and 8 of each capacitor C1-C4 may be made of conductive silver frit or the like as shown in Fig. 2A. Moreover, there may be a gap 22 of from about 0.2 to 1.5 mm, more preferably from about 0.3 to 1.0 mm (e.g., 0.6 mm), between the coplanar capacitor electrodes 7 and 8 of a capacitor (C1, C2, C3 and/or C4) as shown in Fig. 2A. In Fig. 2A, the capacitors C1-C4 are covered with an insulating black frit layer 9 which is the same as the opaque layer 9 discussed above with respect to Fig. 1(b). In Fig. 2A, a contact pad array is provided in the center of the sensor array, and includes four contact pads electrically connected to the respective electrodes 7 of the capacitors C1-C4, and four contact pads electrically connected to the respective electrodes 8 of the capacitors C1-C4. An example contact pad is referred to by reference numeral 28 in Fig. 2A. The four white colored contact pads 28 in Fig. 2A are electrically connected to the respective capacitor electrodes 7 of capacitors C1-C4, whereas the dark grey colored contact pads 28 in Fig. 2A are electrically connected to the respective capacitor electrodes 8 of the capacitors C1-C4. All of the sensing capacitors C1-C4 are sensitive to moisture such as rain on the external surface of the window.

In the Fig. 2A embodiment of the invention, each of the capacitors C1-C4 of the capacitive sensor is formed using fractal geometry. In particular, each of the coplanar electrodes 7 and 8 of each capacitor C1-C4 is formed with a fractal geometry. Fractal design patterns allow, a high capacitance to be realized in a small area, and are therefore desirable over other geometries in rain sensor applications. Fractal geometry may be grouped into (a) random fractals, which may be called chaotic or Brownian fractals and include a random noise component, and (b) deterministic or exact fractals. In deterministic fractal geometry, a self-similar structure results from the repetition of a design or motif (or "generator") (i. e., self-similarity and structure at all scales). In deterministic or exact self-similarity, fractal capacitors may be constructed through recursive or iterative means. In other words, fractals are often composed of or include many copies of themselves at different scales.

In the Fig. 2A embodiment, it can be seen that the coplanar electrodes 7 and 8 of each capacitor (where the electrodes 7 and 8 are shown but not labeled in Fig. 2A due to the dark color of the frit 9, but are spaced apart by gaps 22) have fractal geometries and are arranged substantially parallel to each other throughout the meandering length of each capacitor. In other words, each electrode 7, 8 of a given capacitor (e.g., C1, C2, C3 or C4) has a meandering shape in the fractal geometry, but stays substantially parallel to the other electrode (the other of 7, 8) of the capacitor throughout the meandering length of the capacitor. The overall length of each capacitor (e.g., C1), along the meandering length of the fractal, is from about 25 to 200 mm in certain example embodiments of this invention, more preferably from about 30 to 90 mm, with an example being about 50 mm.

The fractal pattern of Fig. 2A is a Hilbert fractal pattern. The electrodes 7, 8 of the capacitors C1-C4 in the Fig. 2A embodiment form a Hilbert fractal pattern, for purposes of example only and without limitation. In particular, the capacitors shown in Fig. 2A are shaped in a third-order Hilbert fractal manner. Hilbert fractals are continuous space-filling fractals, with fractal dimensions of two. This means that higher-order fractals will become more square-like. A Hilbert fractal can be formed by using the following L-system:

```
Hilbert {
        Angle 90
        Axiom X
        X = -YF+XFX+FY-
        Y = +XF-YFY-FX+
}
```

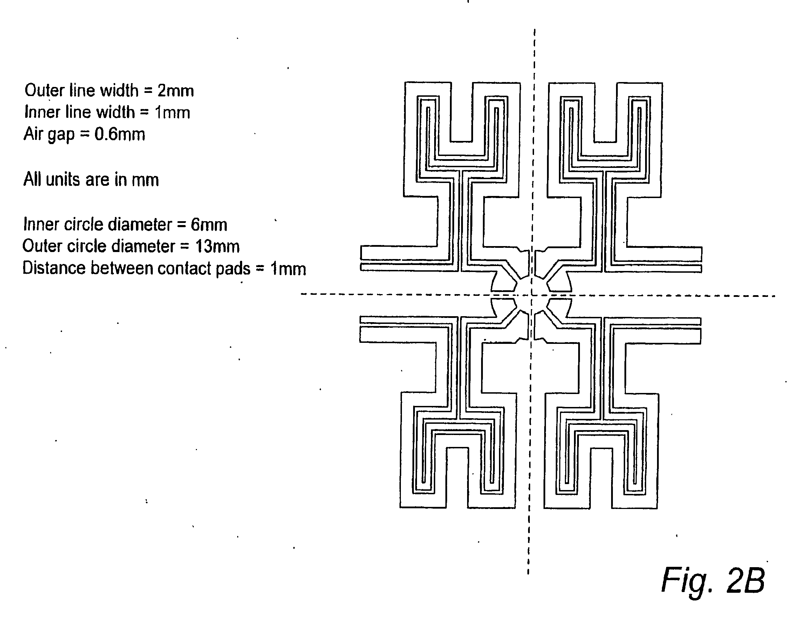

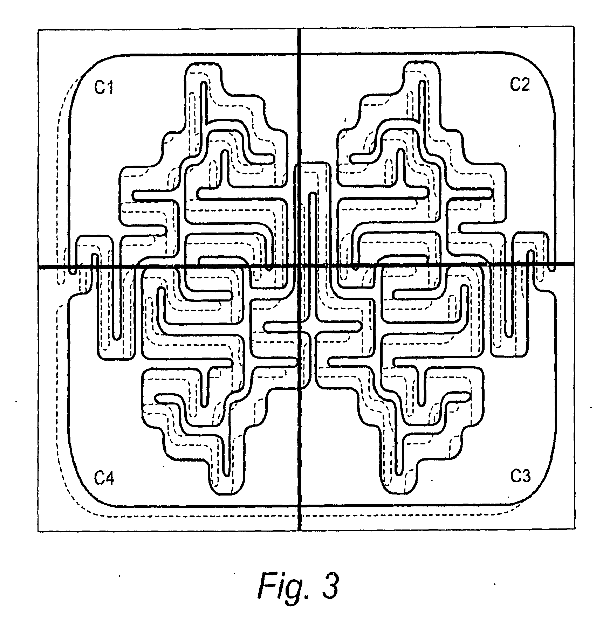

where "Angle 90" sets the following rotations to 90 degrees, X and Y are defined functions, "F" means "draw forward", "+" means "turn counterclockwise", and "-" means "turn clockwise". While Hilbert fractal geometries may be used in forming the capacitors C1-C4 in certain example embodiments of this invention, this invention is not so limited, and other types of fractals may also be used to form the capacitor shapes. In certain example embodiments of this invention, as shown in Figs. 2A, 2B and 3, all sensing capacitors of the sensing array may be identical or substantially identical in shape.

Each of the capacitors C1-C4 in the sensor array may be electrically floating (this may be called a virtual ground in certain example instances) so as to not have a fixed common ground such as a fixed zero volts, and/or spatially separated or the like which may be useful with respect to the correlation functions. Additionally, the lack of a common ground means that the capacitive array will not be subject to adverse effects from interference such as, for example, EMI interference thereby reducing the potential for false wipes, false detections, and the like.

The fractal design for capacitors C1-C4 may be used in any of Figs. 1(a)-1(f).

Fig. 1(c) is a cross sectional view of another example, which may use the system of Figs. 1(a) and one or more of Figs. 2-12. In Fig. 1(c), the vehicle window (e.g., backlite) is made up of only one glass sheet 10, and the electrodes 7, 8 of the capacitor are provided on, directly or indirectly, the interior major surface of the glass sheet 10. The capacitor (e.g., C1) shown in Fig. 1(c) is designed such that it is affected by a rain droplet (or other material) on the exterior surface of the window because the electric field Es of the capacitor extends to or beyond the exterior surface of the window as shown in Fig. 1(c) and thus can interact with the rain droplet or other material on the window's exterior surface. Each of the capacitors C1-C4 is formed in a similar manner. It is noted that the use of the word "on" herein covers both directly on and indirectly on, and is not limited to physical contact or touching unless expressly stated. An opaque layer 9, similar to that shown in the Fig. 1(b) embodiment, may also be provide in the Fig. 1 (c) embodiment if desired.

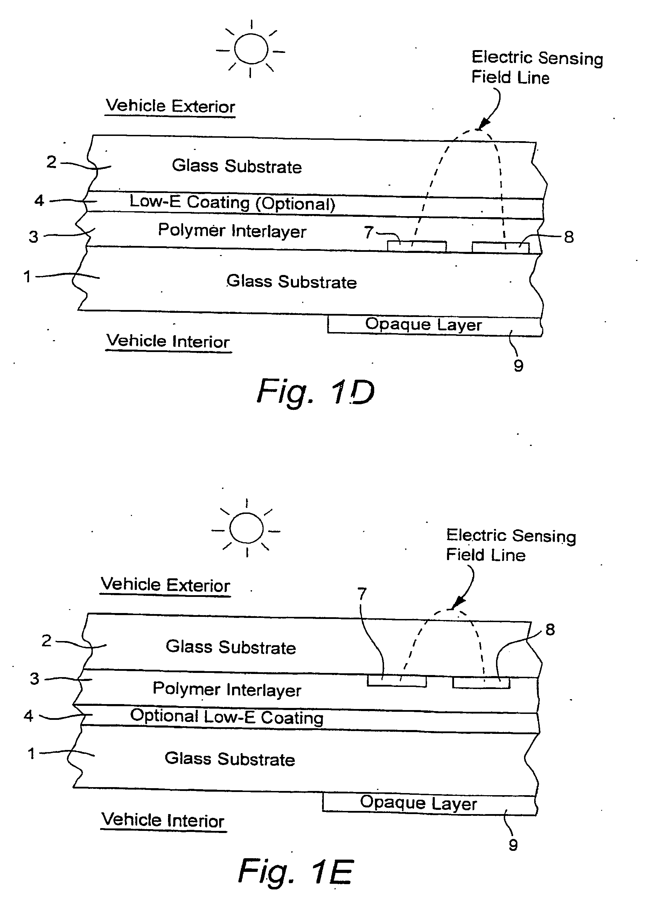

Fig. 1(d) is a cross sectional view of another example, which may use the system of Figs. 1(a) and one or more of Figs. 2-12. In Fig. 1(d), the vehicle window (e.g., laminated windshield) includes glass sheets 1 and 2 laminated together via polymer based interlayer 3, and optionally includes a low-E coating 4 on either substrate 1 or substrate 2. Fig. 1 (d) differs from Fig. 1 (b) in that the electrodes 7, 8 of the capacitor are provided on the major surface of glass substrate 1 that is furthest from the vehicle interior. The capacitor electrodes 7, 8 may contact the polymer interlayer 3 in this embodiment, in certain example instances. The capacitor (e.g., C1, C2, C3 or C4) shown in Fig. 1(d) is designed such that it is affected by a rain droplet (or other material) on the exterior surface of the window because the electric field Es of the capacitor extends to or beyond the exterior surface of the window as shown in Fig. 1 (d) and thus can interact with the rain droplet or other material on the window's exterior surface. Each of the capacitors C1-C4 of the sensor array is formed in a manner similar to that shown for the capacitor of Fig. 1 (d). Opaque layer 9 may also be provided in Fig. 1 (d) if desired, over a portion of the window so as to shield the capacitor electrodes from a vehicle passenger's view. In fig. 1(d), the electrodes 7 and 8 may be formed of a conductive silver frit or ITO printed or patterned directly on and contacting the surface of substrate 1. However, this invention is not so limited, and the electrodes 7 and 8 of one or more capacitors of the sensor may instead be formed and patterned from a metallic conductive IR reflecting layer (e.g., silver based layer) of a low-E coating 4 that is supported by the window.

Fig. 1(e) is a cross sectional view of another example, which may use the system of Figs. 1(a) and one or more of Figs. 2-12. In Fig. 1(e), the vehicle window (e.g., laminated windshield) includes glass sheets 1 and 2 laminated together via polymer based interlayer 3, and optionally includes a low-E coating 4 on either substrate 1 or substrate 2. Fig. 1(e) differs from Fig. 1(b) in that the electrodes 7, 8 of the capacitor (e.g., C1, C2, C3 or C4) are provided on the major surface of the exterior glass substrate 2 that is closest to the vehicle interior. The capacitor electrodes 7, 8 may contact the polymer interlayer 3. The capacitor (e.g., C1, C2, C3 or C4) shown in Fig. 1(e) is designed such that it is affected by a rain droplet (or other material) on the exterior surface of the window because the electric field Es of the capacitor extends to or beyond the exterior surface of the window as shown in Fig. 1(e) and thus can interact with the rain droplet or other material on the window's exterior surface. Each of the capacitors C1-C4 of the sensor array is formed in a manner similar to that shown for the capacitor of Fig. 1(e). Opaque layer 9 may also be provided in Fig. 1 (e) if desired, over a portion of the window so as to shield the capacitor electrodes from the view of a vehicle passengers(s).

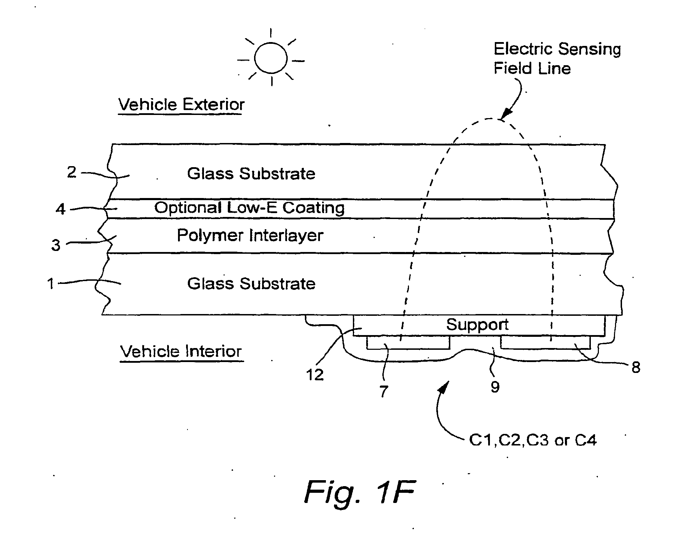

Fig. 1(f) is a cross sectional view of another example, which may use the system of Figs. 1(a) and one or more of Figs. 2-12. In Fig. 1(f) , the vehicle window (e.g., laminated windshield) includes glass sheets 1 and 2 laminated together via polymer based interlayer 3, and optionally includes a low-E coating 4 on either substrate 1 or substrate 2. Fig. 1(f) differs from Fig. 1(b) in that the electrodes 7, 8 of the capacitor (e.g., C1, C2, C3 or C4) are provided on the major surface of the interior glass substrate 1 that is closest to the vehicle interior, via support member 12. The support member 12, located between the glass substrate 1 and the electrodes 7, 8, may be made of glass, silicon or the like. The capacitor (e.g., C1, C2, C3 or C4) shown in Fig. 1(e) is designed such that it is affected by a rain droplet (or other material) on the exterior surface of the window because the electric field Es of the capacitor extends to or beyond the exterior surface of the window as shown in Fig. 1 (f) and thus can interact with the rain droplet or other material on the window's exterior surface. Each of the capacitors C1-C4 of the sensor array is formed in a manner similar to that shown for the capacitor of Fig. 1(f). Opaque layer 9 may also be provided in Fig. 1(f) if desired, over a portion of the window so as to shield the capacitor electrodes 7, 8 from the view of a vehicle passengers(s).

FIG. 2B is a plan view of an example pattern for a quadrant capacitive array of fractal shaped capacitors C1-C4 for the capacitive sensor according to this invention. The four capacitors shown in Fig. 2B are similar to those of Fig. 2A, except for the precise shapes thereof. The Fig. 2B capacitors maybe used in any of Figs. 1(a)-(f). The superimposed dashed lines show the divisions into four distinct capacitors C1-C4. The outer line width may be about 2mm, and the inner line width about 1mm.

Fig. 3 is an enlarged picture of another exemplary quadrant capacitive array of fractal shaped capacitors C1-C4 for the capacitive sensor according to this invention. The four capacitors shown in Fig. 3 are similar to those of Figs. 2A and 2B, except for the precise shapes thereof. The Fig. 3 fractal capacitors may be used in any of Figs. 1(a)-(f). The superimposed lines show example division between capacitors C1-C4 in Fig. 3. It will be appreciated that some example embodiments may have capacitive arrays with as few as two capacitors. However, it is preferable to have at least four capacitors to pick up and derive nuances in perturbations.

The use of the fractal geometry for the sensing capacitors C1-C4 is in reducing false readings due to EMI interference. In particular, fractals at high iterations help reduce EMI interference issues, because the Faraday cage or quasi-Faraday cage of the fractal at high iterations reduces EMI coupling thereby reducing adverse effects of EMI interference. Fractals at high iterations form quasi-Faraday cages.

The readout electronics look at the interaction of rain and/or other perturbations on the window. This process may be accomplished by sequentially charging capacitors, reading their data, quantizing that data, and/or erasing the charges.

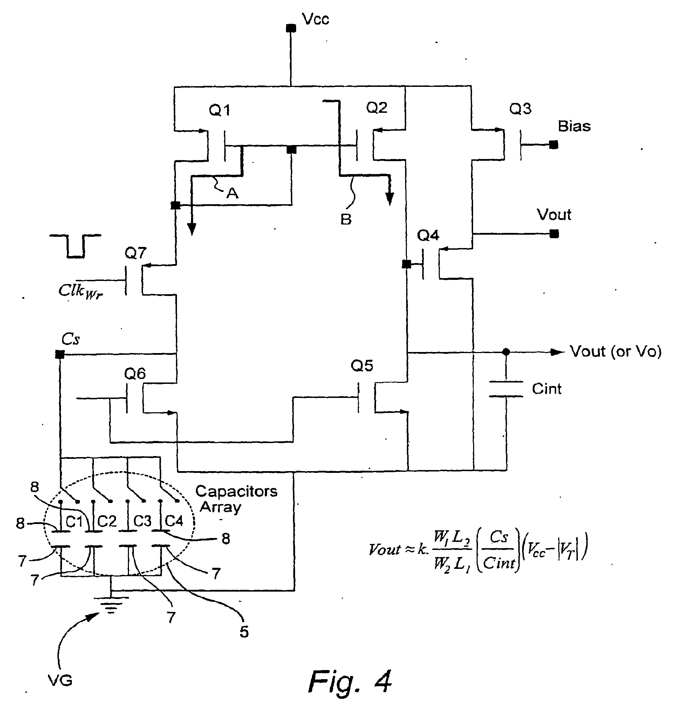

Fig. 4 is a circuit diagram of a sensing or read-out circuit. The sensing circuit of Fig. 4 may be made up of the electronics unit 12 and the capacitive sensor array 5 of Fig. 1. Any of the capacitors of Figs. 1(b)-1(f), 2A, 2B, and/or 3 may be used as the capacitors C1-C4 of the circuit in Fig. 4. The Fig. 4 circuitry is used for a write clock pulse in readout electronics. Transistors Q1, Q2, and Q7 are p-channel MOSFETs, with transistors Q1 and Q2 primarily being responsible for a write phase. Transistors Q5 and Q6 are n-channel MOSFETs.

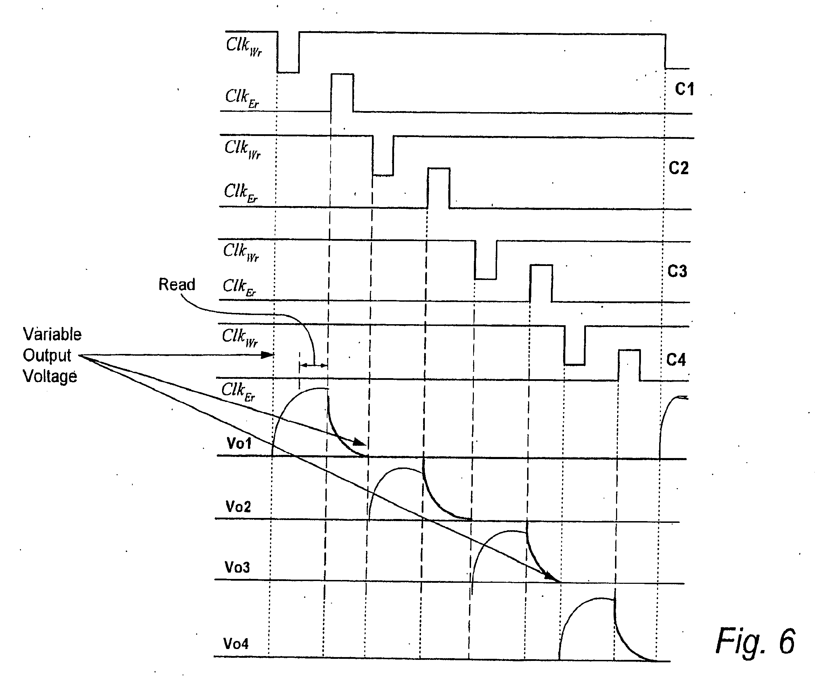

Still referring to Fig. 4, during a write phase a write pulse $Clk_{Wr}$ is input to the gate of transistor Q7, which functions like a resistor or switch, charging one or more of the capacitors C1-C4 of the sensor capacitance $C_s$. Fig. 6 includes certain signals used in the Fig. 4 circuit in the write cycle. In the write cycle, Transistor Q1 is in a saturated mode, since its gate and drain are connected, so that Q1 is on. Q4, Q5 and Q6 are turned off, and Q2 is on during the write mode. Transistors Q3 and Q4 are optional. When Q7 is turned on by the write pulse, we have a write cycle, and Vcc appears at Cs via A and charges one or more of the capacitors C1-C4 of the sensor capacitance Cs. $V_{cc}$ may be a constant voltage, such as 5V. One or more of the capacitors C1-C4 may be charged at a time during a write cycle. However, the circuit charges and reads the capacitors C1, C2, C3 and C4, one at a time (e.g., see Figs. 6). Thus, during one write cycle, only one of the capacitors C1, C2, C3 or C4 is charged.

The above process described for the left side of the Fig. 4 sensing circuit is essentially mirrored on the opposite or right side of the Fig. 4 circuit. As current flows through the left-side branch, current also flows at B through the rightside branch, and changes to $C_s$ are mimicked, or substantially mimicked in internal mimicking capacitance $C_{int}$. When Q7 is turned on, current also flows through Q2 (which is on) and charges $C_{int}$ using Vcc. Thus, the charging of one of the capacitors C1-C4 is mimicked by the charging of capacitor $C_{int}$. In other words, $C_{int}$ is charged to the same degree, or substantially the same degree, as the capacitor (e.g., C1) being charged on the other side of the Fig. 4 circuit. The output voltage of the Fig. 4 circuit, Vout (or Vo), is based on $C_{int}$ and is taken at or proximate an electrode of the capacitor $C_{int}$ as shown in Fig. 4. An example formula reflecting Vout (or Vo) is shown at the bottom of Fig. 4. Accordingly, it will be appreciated that the output Vout (or Vo) of the Fig. 4-5 circuit is related to and based on the capacitors C1-C4 of the sensor Cs. More specifically, the output Vout of the Fig. 4-5 circuit is related to and indicative of the status of capacitors C1-C4 and the effects on those capacitors of moisture on the exterior window surface, even though Vout is not taken directly from capacitors C1-C4. In particular, Vout (or Vo) is read out during the write cycle, due to the write pulse shown in Fig. 4 (see also Fig. 6). In the formula at the bottom of Fig. 4 for Vout, W1 is for Q1, W2 is for Q2, L1 is for Q1, L2 is for Q2, where W is transistor channel width, and L is transistor channel length; and $V_T$ is a threshold voltage of each MOSFET. It is noted that alternatively, the output Vout of the circuit may be taken directly (instead of indirectly via $C_{int}$) from the sensing capacitors C1-C4.

Transistors Q3 and Q4 are optional. These transistors may be at low voltages (e.g., off) during the write phase, and on during the erase phase.

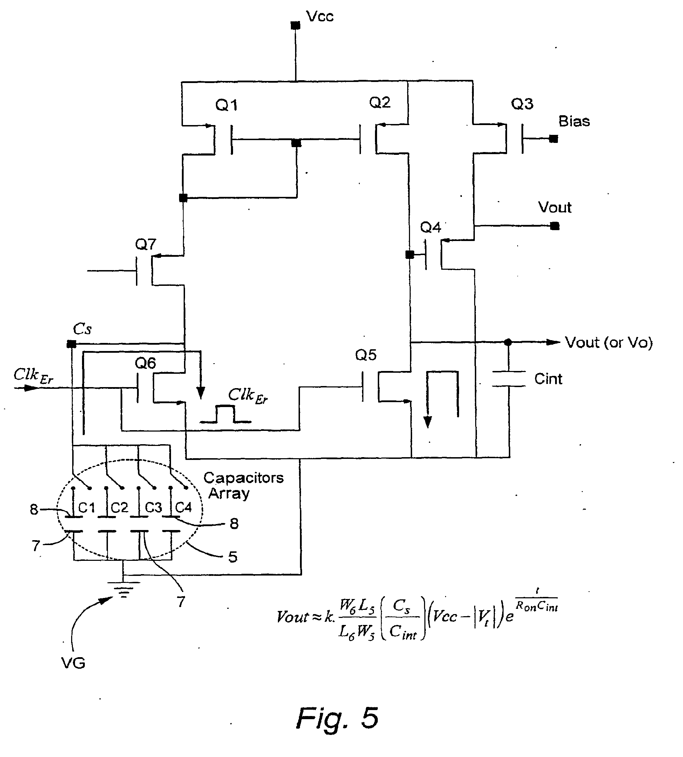

The output signal Vout (or Vo) of the Fig. 4 (and Fig. 5) sensing circuit is sigma-delta modulated. Sigma-delta modulators, which can be used in a sigma-delta digital-to-analog converter (DAC), can provide a degree of shaping or filtering of quantization noise which may be present. Example sigma-delta modulators that may be used are described in U.S. Patent Nos. 6,975,257, 6,972,704, 6,967,608, and 6,980,144 . In sigma-delta conversion, oversampling, noise shaping and/or decimation filtering may be brought to bear. Example advantages of sigma-delta modulation include one or more of: (i) analog anti-aliasing filter requirements are less complex and thus may be cheaper than certain example nyquist based systems; (ii) sample and hold circuitry may be used due to the high input sampling rate and low precision A/D conversion; (iii) since digital filtering stage(s) may reside behind the A/D conversion, noise injected during the conversion process such as power-supply ripple, voltage reference noise and noise in the A/D converter itself may be controlled; (iv) since the sigma-delta converter may be essentially linear it may not suffer from appreciable differential non-linearity and/or background noise level(s) may be independent of input signal level. Improved S/N ratios may be realized.

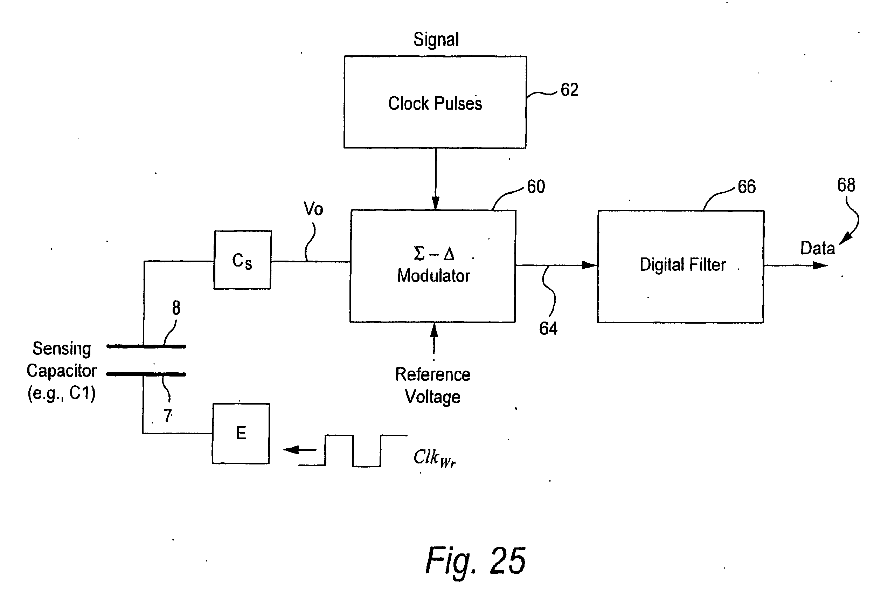

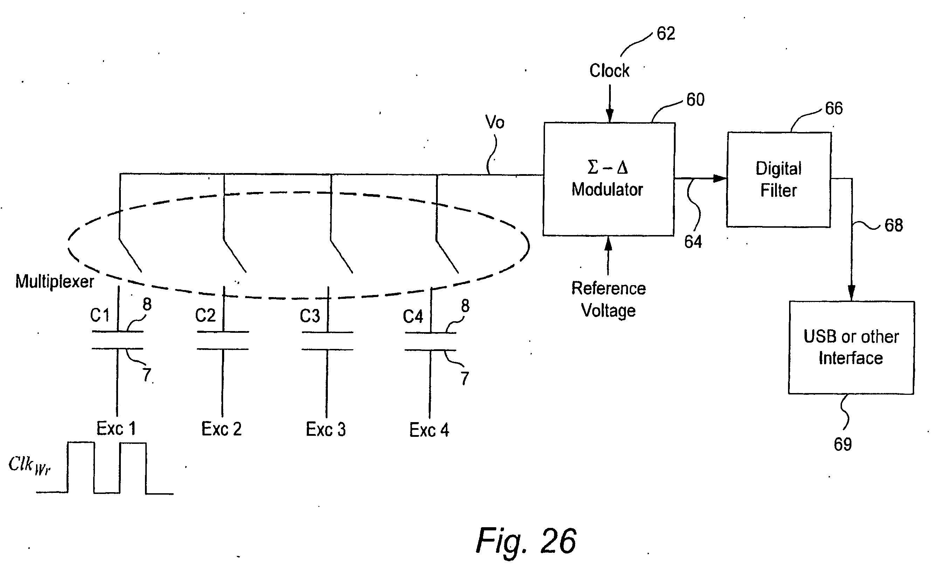

Fig. 25 which is a simplified version of a sigma-delta modulator system, for modulating and/or converting the output signal Vout (or Vo) of the Fig. 4 (and Fig. 5) circuit. In Fig. 25, a write pulse (see pulse at the bottom of Fig. 25), is used to charge the sensing capacitor (CI, C2, C3 or C4) as explained above with respect to Fig. 5. The square wave excitation (e.g., for writing and/or erasing cycles) is used on the sensing capacitor to charge and discharge it. This process is mirrored or mimicked, for $C_{int}$ as explained herein. The output signal Vout (or Vo) of the Fig. 4 circuit is sigma-delta modulated by sigma-delta modulator 60. The modulator 60 make take the form of a hardware circuit, firmware, and/or software. Clock pulses 62 from a clock are input to the modulator 60, which trigger the latch of a quantizer of the modulator 60. After the output signal Vout (or Vo) are sigma-delta modulated by modulator 60, the modulated signals 64 are forwarded to an optional digital filter 66 (e.g., lowpass filter or the like). Digital filter 66 processes the sigma-delta modulator digital output 64, which is a stream of 0s and Is. The data is then scaled appropriately using calibration coefficient(s). The filtered data 68 is then read through a serial interface 69 or the like and sent to a computer which does the correlation calculations for chunks of data packets. Thus, the data from the interface 69 is then correlated (e.g., autocorrelated and/or cross-correlated) as explained herein. Fig. 26 is similar to Fig. 25, except that Fig. 26 illustrates an array of sensing capacitors C1-C4 which are multiplexed via a multiplexer.

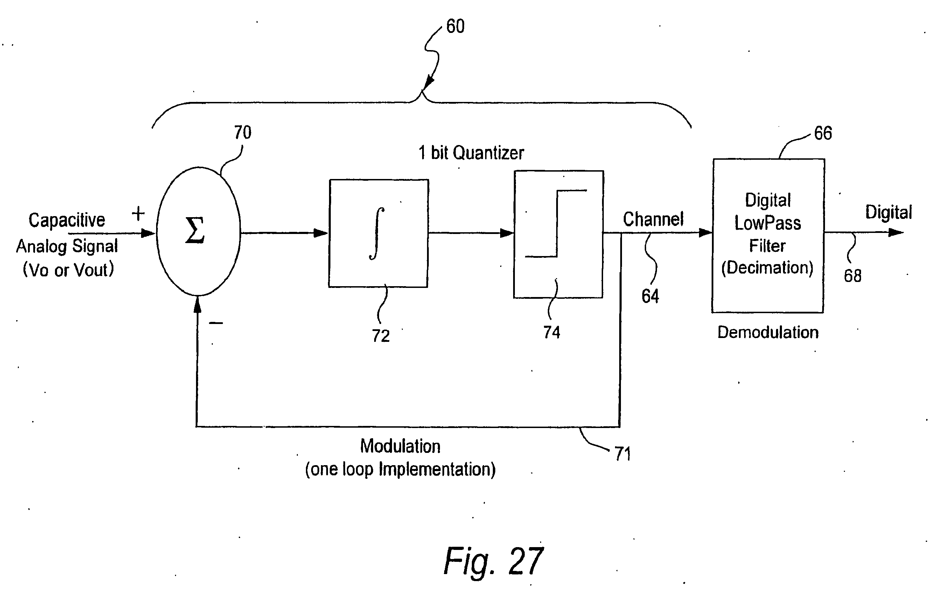

Fig. 27 is a block diagram illustrating an example of sigma-delta modulation which maybe performed in the modulator 60 of Figs. 25-26. Again, this modulation may be performed by circuitry, firmware and/or software. The analog output signal Vout (or Vo) of the Fig. 4 (and Fig. 5) circuit is received by a summer 70 of the sigma-delta modulator 60. Summer 70 receives the analog Vout (or Vo) signal as well as a feedback signal from a feedback loop 71 of the modulator 60. The output of summer 70 is received by integrator 72 whose output is received by a quantizer 74 such as a one bit quantizer. The digital output 64 is then filtered 66 as explained above, and so forth. The sigma-delta modulation is advantageous in that it provides oversampling and allows noise such as EMI to be treated and its adverse effects reduced. In particular, the noise is spread by the sigma-delta modulation out over the frequency band so that the signal-to-noise (S/N) ratio can be improved.

Referring back to Fig. 4, each capacitor (C1, C2, C3, C4) is discharged before charging the next. The process of discharging each capacitor is described in connection with the erase pulse, with respect to Figs. 5-6.

Fig. 5 is a circuit diagram of the Fig. 4 sensing circuit, with respect to an erase cycle. During an erase cycle, a previously charged capacitor (C1, C2, C3 or C4) is discharged before the next write cycle. Fig. 6 includes example signals used during the erase cycle(s). No reading is performed during the erase phase. During an erase cycle or phase, Q7 is turned off (the write pulse $Clk_{Wr}$ is not present), and transistors Q5 and Q6 are turned on by an erase pulse $Clk_{Er}$ (see also Fig. 6). Thus, the capacitor (C1, C2, C3 and/or C4) discharges to ground (e.g., V=0) or virtual ground (VG), as does $C_{int}$. Again, $C_{int}$ mimics the capacitance of the sensor Cs. Once the capacitances Cs and $C_{int}$ have been connected to ground and discharged, the erase pulse and cycle ends. Then, the next capacitor (C1, C2, C3 or C4) in the sequence can be prepared, charged, and read.

Thus, referring to Figs. 4-6, it will be appreciated that a rain sensor comprises: a sensing circuit comprising at least first and second sensing capacitors (e.g., C1 and C2) that are sensitive to moisture on an external surface of a window, and at least one mimicking capacitor ($C_{int}$) that mimics at least charging and/or discharging of at least one of the first and second sensing capacitors; wherein a writing pulse ($Clk_{Wr}$) causes at least the first sensing capacitor (e.g., C1) to be charged, and an erasing pulse ($Clk_{Er}$) causes each of the first sensing capacitor (e.g., C1) and the mimicking capacitor ($C_{int}$) to substantially discharge; wherein presence of rain on the external surface of the window in a sensing field of the first sensing capacitor (e.g., C1) causes a voltage (see Vo or Vout) at an output electrode of the mimicking capacitor ($C_{int}$) to fluctuate in a manner proportional to fluctuation of voltage at an output electrode (8) of the first sensing capacitor (e.g.,Cl), even though the rain is not present in a field of the mimicking capacitor ($C_{int}$); and wherein rain is detected based on an output signal (see Vo or Vout) from the output electrode of the mimicking capacitor ($C_{int}$), wherein the output signal is read at least between an end of the writing pulse ($Clk_{Wr}$) and a beginning of the erase pulse ($Clk_{Er}$) (see the "read" area in Fig. 6).

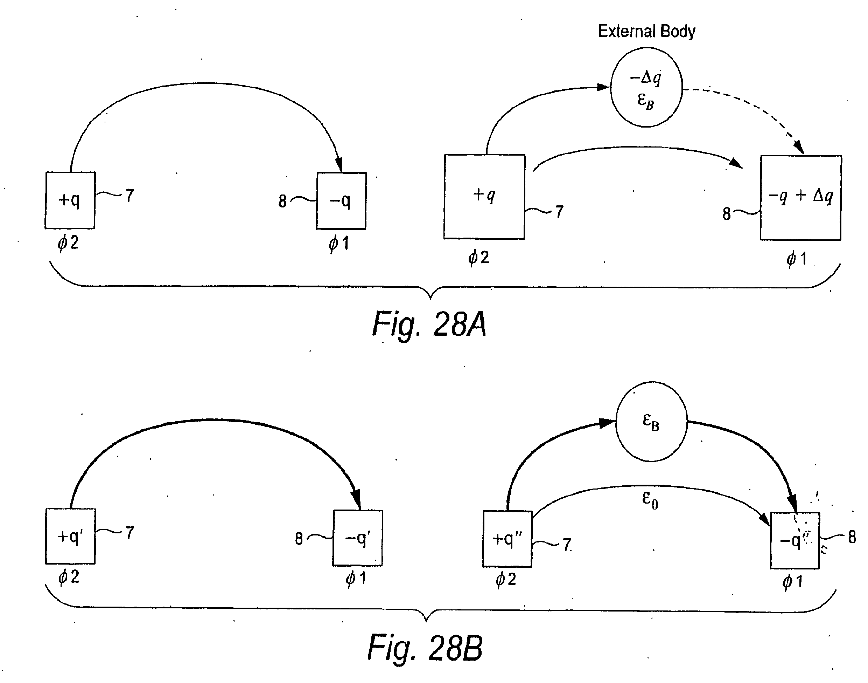

Still referring to Fig. 5, during the erase cycle, the erase pulse $Clk_{Er}$ causes the capacitor (C1, C2, C3 and/or C4) and thus also the mimicking capacitance $C_{int}$ to discharge to ground (e.g., a fixed potential such as V=0) (see the conventional ground symbol in Fig. 5). However, it has been found that a fixed ground can lead to certain problems. Thus, during the erase cycle the erase pulse $Clk_{Er}$ causes the capacitor (C1, C2, C3 and/or C4) and thus also the mimicking capacitance $C_{int}$ to discharge to a virtual ground VG that is floating (see VG and the ground symbol in Fig. 5). Stated another way, an electrode of each of capacitors C1-C4 is floating. It may be at a floating or reference potential/ voltage. It has been found that a floating or virtual ground can be highly advantageous (e.g., a floating ground and/or capacitor electrode(s) can lead to a significant reduction in EMI interference problems). For example, such a floating or virtual ground may help reduce the chance of the sensor system being tricked by EMI interference. In this respect, reference is made to Figs. 28(a) and 28(b) (along with Fig. 5).

In Figs. 28(a)-(b), reference numerals 7 and 8 refer to the electrodes of a capacitor (e.g., C1, C2, C3 or C4). In these figures, "q" refers to charge and Φ refers to potential (Φ1 is different than Φ2). In Fig. 28(a) the capacitor (e.g., C1) is grounded at a fixed potential such as 0 volts (the charge at grounded electrode 7 is fixed at +q). In this respect, when the charge at grounded electrode 7 is fixed at +q, when one brings an external body $E_B$ (e.g., human finger with a higher dielectric constant) into a sensing area of the capacitor (e.g., touching the front surface of the windshield over the capacitor) this external body induces a change in charge -Δq and the other electrode 8 which is not fixed changes from a charge of -q to a charge of -q + Δq in an attempt to balance charge. Thus, if one were to ground the capacitor at a fixed potential such as 0 volts, and read an output voltage of the capacitor, one would read charge changes caused by Δq which is not needed, and this may lead to false readings. Comparing Figs. 28(a) and 28(b), Fig. 28(b) illustrates an advantage of causing an electrode 7 of the sensing capacitor (e.g., any of C1-C4) to be floating (e.g., at a floating or virtual ground). In Fig. 28(b), the charge q at electrode 7 is not fixed. E.g., the charge at electrode 7 changes from +q' to +q'' when the external body comes into contact with the windshield at a sensing area of the capacitor, thereby indicating the floating nature of the electrode. In Fig. 28(b), when the external body (e.g., human finger) is applied to the windshield over the capacitor sensing area the free charges on both electrodes 7 and 8 of the capacitor change. Thus, the adverse effect of Δq is eliminated or reduced by using the floating or virtual ground VG (electrode 7 is floating). In particular, when electrode 7 is floating as in Fig. 28(b), the external body ($E_B$) does not adversely affect summation of charge because adding the charges (+q'' and -q'') of the electrodes 7 and 8 when the external body is present gives zero or substantially zero. False readings due to EMI interference can also be reduced by using this floating feature. Thus, the floating nature may allow the absolute values of the charges q at capacitor electrodes 7 and 8 to be the same or substantially the same even when the external body is present since the electrode 7 is floating and is not fixed at ground. This is one example reason why it may be advantageous to cause the electrodes 7 of the capacitors C1-C4 to be floating, or be at a virtual ground VG as shown in Fig. 5. Thus, referring to Figs. 5 and 28, the sensing capacitors C1-C4 are floating and both electrodes thereof are isolated from ground. Accordingly, the rain sensor comprises at least one sensing capacitor (C1, C2, C3 and/or C4) that is sensitive to moisture on an external surface of a window, the sensing capacitor including a first capacitor electrode (8) that receives a charging signal and a second capacitor electrode (7) spaced apart from the first capacitor electrode (8); and wherein the second capacitor electrode (7) is floating so that the sensing capacitor is isolated from ground.

Fig. 6 is an exemplary timing diagram of signals applied to or read out from the Fig. 4-5 circuit during the write and erase modes/cycles. As noted above, the capacitors (C1-C4) are sequentially charged, read, quantized, and erased. Fig. 6 shows a clock write ($Clk_{Wr}$) and erase ($Clk_{Er}$) pulse for each capacitor C1-C4, in sequence. Then, voltages are quantized and output. Variable output voltage Vo1-Vo4 correspond to capacitors C1-C4 respectively, and thus $C_{int}$. It is noted that the output signals Vo1-Vo4 in Fig. 6 are taken at $V_{out}$ (or Vo) in Figs. 4-5. Moreover, in Fig. 6, the output signals Vo are read or analyzed (e.g., for autocorrelation and/or cross-correlation) at the peak read areas (see "Read" in Fig. 6) of the output signals where the output signals are substantially stabilized and/or the capacitor saturated. In particular, the output signal $V_{out}$ (or Vo) in Fig. 6 for a particular capacitor (CI) is read in the "read area" after the end of the write pulse ($Clk_{Wr}$) for that capacitor, and before and/or up to the beginning of the erase pulse ($Clk_{Er}$) for that capacitor.

Still referring to Fig. 6, for example, a drop of water on the exterior surface of a windshield will affect the magnitude of the output signal(s) $V_{out}$ (or Vo). For instance, a water drop over the area of a given capacitor (e.g., C1) will cause the level of the output signal(s) $V_{out}$ (or Vo) for that capacitor in the "read" area of the signal to be higher compared to a situation where no such drop was present. The exact magnitude or level depends on the size of the water drop. With increasing water amounts, the magnitude of the signal at the "read" area gets higher because the dielectric constant of water is higher than that of glass and/or air and this causes the capacitance to increase. In a similar manner, if no water drop is present on the windshield over the area of a given capacitor (e.g., C1I) then this will cause the level of the output signal(s) $V_{out}$ (or Vo) for that capacitor in the "read" area of the output signal to be lower compared to a situation where a drop was present.

The signals from the capacitor(s) may be converted from analog-to-digital via a sigma-delta modulation scheme or the like, which may be implemented at the software level or in any other suitable manner such as via hardware. The principle behind sigma-delta architecture is to make rough evaluations of the signal, to measure the error, integrate it, and then compensate for that error. Data may be oversampled at a given rate of at least 32 kHz, e.g., more preferably 64 kHz, though it will be appreciated that other sampling rates may be used. The course quantization can be recovered by the sigma-delta modulation scheme to produce a simple binary 0 or 1 output, corresponding to on and off, respectively. Thus, the sigma-delta modulation scheme may be used to reduce noise (e.g., at the tail of the signal) and produce a digital output stream (e.g., 1s and 0s).

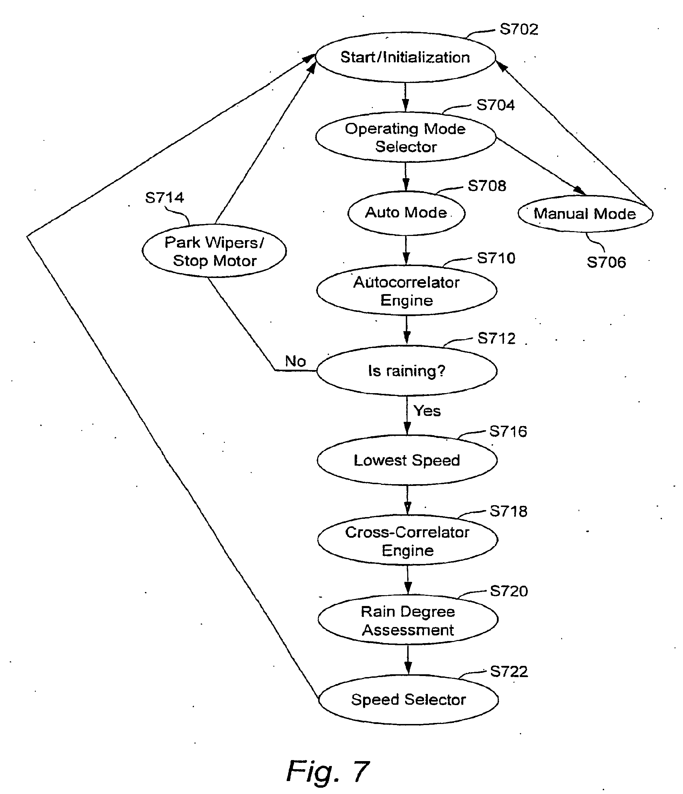

Before discussing the detailed operation of and example mathematics behind an example sensor algorithm, an overview of the states in which the sensor and/or wipers can take will be given in connection with FIG. 7, which is an exemplary state diagram showing how autocorrelation and cross-correlation data may be used to control vehicle wipers. The system begins in Start/Initialization State S702. In this state, all buffers are cleared .Based on the inputs of capacitors $C_1$, $C_2$, ..., $C_n$, analog-to-digital conversion of the signals from the respective inputs is accomplished via sigma-delta modulation. Data is read for the plurality of channels over time period T. Operating Mode Selector State S704 functions as a switch to select between the manual or automatic wiper mode. If Operating Mode Selector State S704 indicates that manual mode is selected, then in Manual Mode State S706 an auto mode may be disabled and a pre-existing manual mode enabled. Then, the system returns to Start/Initialization State S702. However, if Operating Mode Selector State S704 indicates that auto mode is selected, the automatic wiper mode is enabled in Auto Mode State S708.

In Autocorrelator Engine State S710, at least three computations are performed. First, a normalized autocorrelation is calculated for each signal input of the capacitive array. Second, the gradient of the autocorrelation is calculated. Third, the difference between the signal input and a reference non-disturbed signal ($\Delta_1$) may be calculated. This information is passed to Is Raining? State S712, in which at least three conditions are checked to determine whether it is likely that it is raining, there is moisture on the windshield, etc. Likely indications of rain are that the gradient of the autocorrelation is greater than 1, all autocorrelation values are positive, and/or $\Delta_1$ is greater than some pre-defined threshold value t1. If these conditions are not met, the system moves to Park Wipers/Stop Motor State S714, where wipers are parked (if they are moving) or not actuated, and the motor is stopped (if it is engaged), and the system is returned to Start/Initialization State S702.

On the other hand, if all conditions are met (e.g., it is likely that there is an interaction of water, moisture or some other perturbation on the glass, etc.), the system moves to Lowest Speed State S716, in which the wiper motor is activated at the lowest speed available. In Cross-Correlator Engine State S718, the cross-correlation between the input signals from the capacitors is calculated. The cross-correlation curve shape is determined, and the symmetry of the two sides of the cross-correlation curve are checked for symmetry. As will be described below, these checks help, for example, to determine the type of perturbation (e.g., light rain, heavy rain, fog, snow, etc.) hitting the window (e.g., windshield). In Rain Degree Assessment State S720, the "degree of rain" (e.g., heavy, light, etc.) is determined. Based on this determination, the wiper motor is activated at the appropriate speed in Speed Selector State S722. Lastly, the system is returned to Start/Initialization State S702 to determine whether there is any change in conditions outside the car.

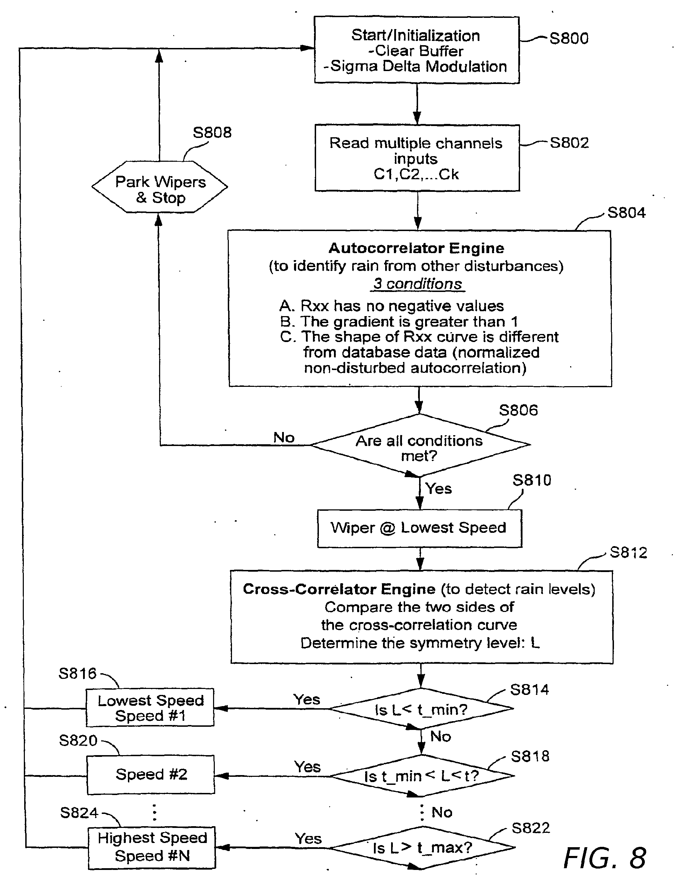

The steps performed by the rain sensor will be described in greater detail in connection with FIG. 8, which is an exemplary flowchart showing how autocorrelation and cross-correlation data can be used to control wipers. In FIG. 8, in step S800 buffers are cleared, and data outputted from the Fig. 4-5 circuit (e.g., from $C_{int}$, or from capacitors C1-C4) is sigma-delta modulated, and is read in S802.

The algorithm for determining whether to engage wipers and, if so, the speed at which to engage wipers begins by autocorrelating the sigma-delta modulated data in step S804. Autocorrelation may be used for analyzing functions or series of values, such as time domain signals. An autocorrelation is the cross-correlation of a signal with itself. Autocorrelation is used for finding repeating or substantially repeating patterns in a signal, such as, for example, determining the presence of a periodic signal buried under noise, identifying the fundamental frequency of a signal that does not actually contain that frequency component but implies within it with many harmonic frequencies, etc. Cross-correlation is a measure of the similarity of two signals, and it is used to find features in an unknown signal by comparing it to a known one; in other words it may be used to perform signal fingerprinting. Cross-correlation is a function of the relative time between the signals. Digital signals from any two capacitors (e.g., C1 and C2) are cross-correlated, in close spatial proximity, and the system looks for any degree of correlation at time lags other than a time lag of zero. This spatio-temporal cross-correlation allows the system to extract patterns in how the falling rain is electrically projecting itself over the sensor array. As an example, the system may take the case of rain drops moving over one capacitor C1 at a time t0 and the same drop "ringing" another capacitor C4 (spatially separated by distance L from C1). If the drop moves at an average speed Vi, the time (t0+T), where T=L/Vi, the cross-correlation function will have another extremum or kink. The normalized magnitude of this extremum value may allow the system to determine the degree of rain falling on the sensor.

Each capacitor C1-C4 has an autocorrelation function associated with the digitized Vout resulting from the readout thereof (or the corresponding readout of $C_{int}$). The autocorrelation function depends on time difference, rather than on actual time. Computing autocorrelations is beneficial because it allows, for example, the deduction of the fundamental frequency irrespective of phase. Autocorrelations are advantageous over other methods, such as Fourier transforms (which may also be used) which provide information about the underlying harmonics only. Thus, the use of autocorrelations of the readouts from capacitors C1-C4 (which as explained above, includes the corresponding readouts from mimicking $C_{int}$) can be used to detect and distinguish between beads of water, dirt, dust, droplets, downpour, etc.

It is noted that herein data from $C_{int}$ is considered to be data from the capacitors C1-C4 because the capacitance $C_{int}$ mimics or substantially mimics the capacitances C1-C4 as explained above. Thus, when we talk about receiving data from the capacitors (e.g., C1-C4), this covers and includes receiving data from capacitance $C_{int}$. In other words, the output from the Fig. 4-5 circuit is considered to be from the capacitors C1-C4, even though it is not taken directly therefrom.

Rain, as a function of time, may be represented by the following formula:

$$b(\vec{r}, t) = \begin{cases} 1 & \text{rain projects electrically} \\ 0 & \text{otherwise} \end{cases}$$

Essentially, b takes on a binary value indicating whether it is raining (1), or not (0). It will be appreciated that b is at least two bits, and that for sigma-delta modulation 24-bits may be used. It also will be appreciated that a scale could be introduced, potentially to capture more data related to the voltages in the capacitors C1-C4 (or $C_{int}$).

At the end of a sampling cycle L, for example, the output from the Fig. 4-5 circuit, e.g., from the array of four capacitors C1-C4 (or via $C_{int}$), ranges from 0000 to 1111, using binary digital data. A single bit turned on can initiate a single wipe. In the case when all bits are off (0000) or all bits are on (1111), then no wipes may be initiated, because likely there is nothing on the windshield, the car is completely submerged, etc., since all capacitors in the array would be reading the same which is not consistent with rain falling on a window. Thus, the most probable events where wipers will be needed are those in the range of 0001 1 to 1110 (i.e., when the output from all capacitors in the array is not the same). When the data falls in this range, or even if it does not fall within this range, correlation functions (auto and/or cross correlation functions) may be performed using the following integral. It will be appreciated that the integral below can be rewritten in other forms, such as, for example, as a summation. The correlations between two drops over a large time period may be computed according to the following formula:

$$R_b(r_1,t;r_2,t_2) = \frac{1}{L}\int_0^L b(r_1,t_1+t)b(r_2,t_2+t)dt$$

$$R_b(r_1,t;r_2,t_2) = R_b(\Delta\vec{r},\Delta t)$$

where $R_b$ is the correlation of a binary event, given as a function of the resistances $r_i$ at given times $t_i$.; and L is a large sampling period during which a burst of data is captured. The sampling period L may be from about 10 to 100 ms, and more preferably from about 20-30 ms, which corresponds approximately to the frequency an average human eye can discern. $R_b$ also is equal to a function of the correlation of the changes in resistances across capacitors $\Delta\bar{r}$ and the change in time. When $\Delta\bar{r} = 0$, the autocorrelation value is determined since data from the same capacitor is being analyzed, and when $\Delta\bar{r} \neq 0$, cross-correlations are computed since correlation is performed on data from different capacitors.

These functions are subject to several example constraints and underlying assumptions. First,

$$\Delta\vec{r} = V\bar{i}\,\Delta t\,.$$

This constraint essentially means that a drop of water or the like is moving at a given time scale. Second,

$$b(\vec{r} + V\bar{i}\Delta t, t + \Delta t) = b(\vec{r},t)\,.$$

This constraint mimics or substantially mimics what happens when drops of water or the like move from one capacitor to another. Thus, the correlation functions might be thought of as discrete steps p in space and *T in* time. This feature may be mathematically represented as the following equation:

$$R_b(m\vec{p},nT) \equiv R(V\bar{i}\Delta t,\Delta t)$$

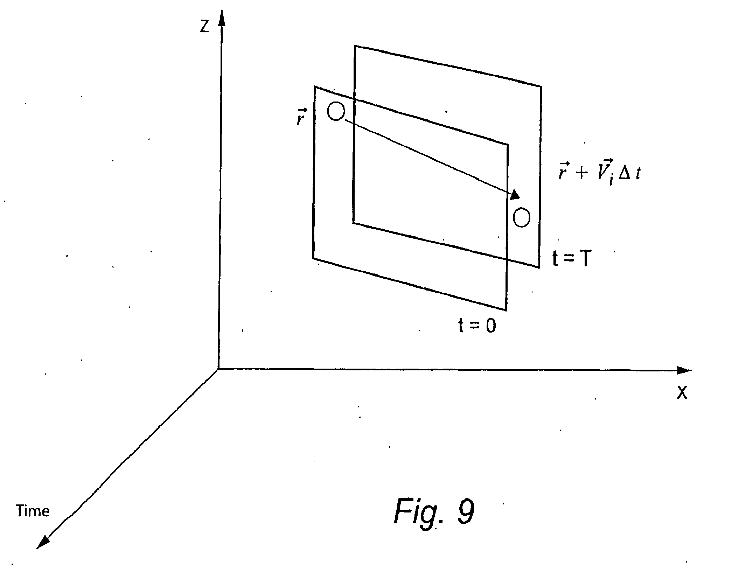

Essentially, the left-hand side of the equation establishes a theoretical grid in space and time across which a drop of water or the like moves. For example, Fig. 9 is an exemplary stylized view of how a rain droplet might travel across a windshield. Fig. 9 shows a rain droplet moving across a windshield on the X-Z plane during an initial time period (t=0) and some late quantum of time (t=T). The assumption that drop distribution is uniform over space and time allows the creation of a binary field caused by rain that is in a wide sense stationary. The system also assumes that the temporal correlation between preferred pixels in the same neighborhood is high in the direction of rain. Lastly, the degree of autocorrelation and cross-correlation in time quantifies rain fall and other disturbances.

It will be appreciated that computational time can be saved because of the nature of correlation matrices and the nature of rainfall. For example, correlation matrices may be symmetrical Additionally, as another example, because rain tends to fall down from the sky and move up along a windshield, it may be sufficient to compare only capacitors that are disposed vertically relative to one another in cross-correlation, while ignoring horizontally adjacent capacitors.

It is noted that while binary data is used one may also utilize grey scale data with respect to outputs from the circuit of Figs. 4-5, or from similar or other suitable circuit(s).

After the autocorrelation has been performed in step S804 (e.g., using the equation(s) discussed above, or some other suitable correlation equation(s)), one or more checks may be performed to enhance the accuracy of the system. Examples of such checks (e.g., if the autocorrelated data Rxx has negative values, if a gradient is greater than one, and/or if the shape of a Rxx curve is different or substantially different from a normalized non-disturbed autocorrelation data stored in memory) are listed in the bottom part of the box for step S804 in Fig. 8. One, two or all three of these checks may be performed.

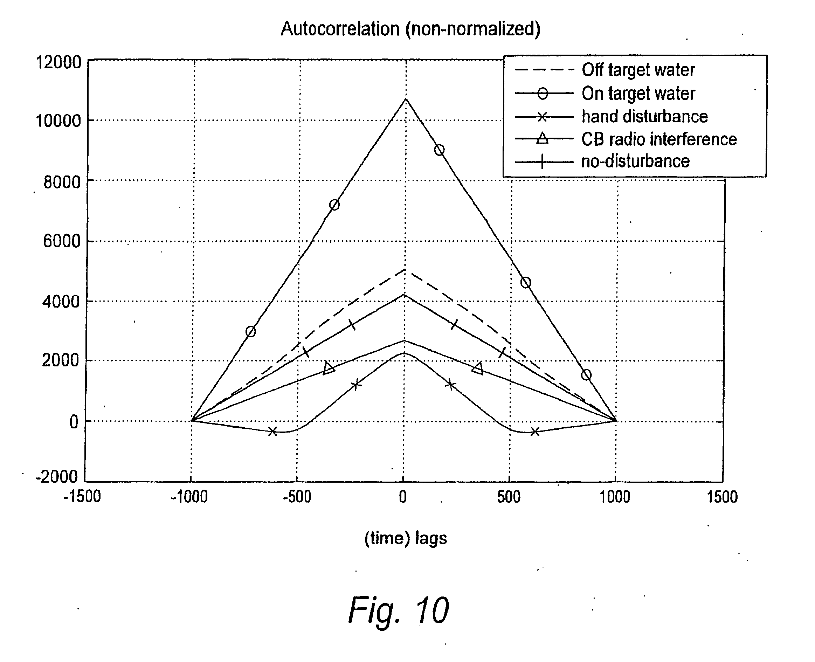

For example, one check of the autocorrelation data in step S806 may be to determine whether the autocorrelated data from one or more of the capacitor(s) (C1, C2, C3 and/or C4; or via mimicking $C_{int}$) comprises negative values. For instance, when the autocorrelated data has negative value(s), then the system or method may indicate that it is not raining, may park the wipers, and/or may not actuate windshield wipers (see step S808). This check is for determining, for example, whether a detected disturbance is actually rain. In this respect, Fig. 10 is a graph plotting example experimentally-obtained maximum values of non-normalized autocorrelations for different disturbances. Fig. 10 illustrates that water signals are greater than non-disturbed signals and are positive, and that external interferences such as electromagnetic waves from CB radios and human hand touching of a window tend to be below the no-disturbance levels and may be negative. Thus, to eliminate or reduce false detections due to external disturbances such as, for example, a human hand touching the window, radio signal interference, etc., any signal with negative autocorrelation values is considered a "no-rain" event. One may consider negative autocorrelation values, or one may take other measures to eliminate or reduce false detections due to external interferences by, for example, comparing gradients (e.g., any curve lower or less than the no-disturbance curve/plot of Fig. 10 may be considered a "no-rain" event), shielding capacitors, etc.

A second example check of the autocorrelation data is to check whether a gradient of an autocorrelation curve associated with the autocorrelated data is greater than one; and if not then the system or method may indicate that it is not raining, park the wipers and/or not actuate wipers of the vehicle (see step S808). In this check, the gradient of the normalized autocorrelation of the disturbance is checked. The gradient of the normalized autocorrelation of a non-disturbed signal is close to 1. Measuring the gradient is beneficial because it is not affected by temperature change. Thus, the rain sensor may be substantially immune to false reads due to temperature changes in certain example embodiments of this invention. Gradients less than 1 (or some other predetermined value) may be considered no-rain events.

A third example check of the autocorrelation data is to determine whether there is a match or substantial match between an autocorrelation curve associated with the autocorrelated data and one or more predetermined autocorrelation curve(s) stored in a database and/or memory. When the shape of the autocorrelation curve associated with the autocorrelated data from the Fig. 4-5 circuit is different or substantially different from an autocorrelation curve relating to normalized non-disturbed autocorrelation data, this may be considered a no-rain event and it may be indicated that it is not raining, wipers may be parked, and/or wipers may be not actuated (see step S808). However, when there is a match or substantial match between the autocorrelation curve associated with the autocorrelated data from the Fig. 4-5 circuit and a predetermined autocorrelation curve associated with moisture such as rain, then it may be indicated that it is raining, wipers may actuated, or kept moving.

In this regard, the shape of the autocorrelation curve may be used to reduce false wipes and/or false detections. In particular, the normalized autocorrelation of a non-disturbed signal is used as a reference. Then, the normalized autocorrelation of each signal captured from the Fig. 4-5 circuit is compared to the reference to identify the closest fingerprint in certain example instances. Generally, the more water present in the sensing area, the larger the difference between the reference signal and the observed signal. In this way, correlation snapshots can be compared to reference snapshots of well-known events such as the presence of rain, dirt, no-disturbance, ice, and so forth. In general, correlation snapshots may be normalized, though the invention is not so limited. Correlation snapshots preferably plot r-values versus quantums of time over a discrete time interval

When there is a match or substantial match between the autocorrelation curve associated with the autocorrelated data from the Fig. 4-5 circuit and a predetermined autocorrelation curve associated with a non-moisture substance such as dirt, then this may be considered a no-rain event and it may be indicated that it is not raining, wipers may parked and/or not actuated (see step S808).

Thus, it will be appreciated that the shape of the autocorrelation curve resulting from the data output from the Fig. 4-5 circuit (from the capacitors C1-C4, or via $C_{int}$) may be used to reduce false wipes as a third condition. For instance, a normalized autocorrelation curve of a non-disturbed signal may be used as a reference. Then, the normalized autocorrelation of each signal captured from the Fig. 4-5 circuit is compared to the reference to identify the closest fingerprint. Generally, the more water present in the sensing area, the larger the difference between the reference signal and the observed/detected signal. In this way, correlation snapshots can be compared to reference snapshots of well-known events. In general, correlation snapshots preferably are normalized, Correlation snapshots preferably plot r-values versus quantums of time over a discrete time interval.

A potential problem with capacitive rain sensors is that rapid temperature changes (e.g., due to the radiation absorbing black frit used to cosmetically hide the sensor pattern) change the dielectric "constant" (permittivity) of the glass. This is then registered as a capacitance change and may erroneously be interpreted as a rain signal. However, a normalized autocorrelation function is unchanged, or substantially unchanged, for different temperatures even though there may be differences for the non-normalized autocorrelation functions for the different temperatures. Thus, the sensing system is unaffected or substantially unaffected by temperature changes.

In addition, extremely slow accumulation of water like ultra-fine mist can slowly build up to a level that triggers sensors based on Nyquist rate converters. In the time of observation that concerns human vision (e.g., 30-60 Hz), the autocorrelation function is able to discriminate between the ultra-slow accumulation of dew or condensation and normal mist and rain.

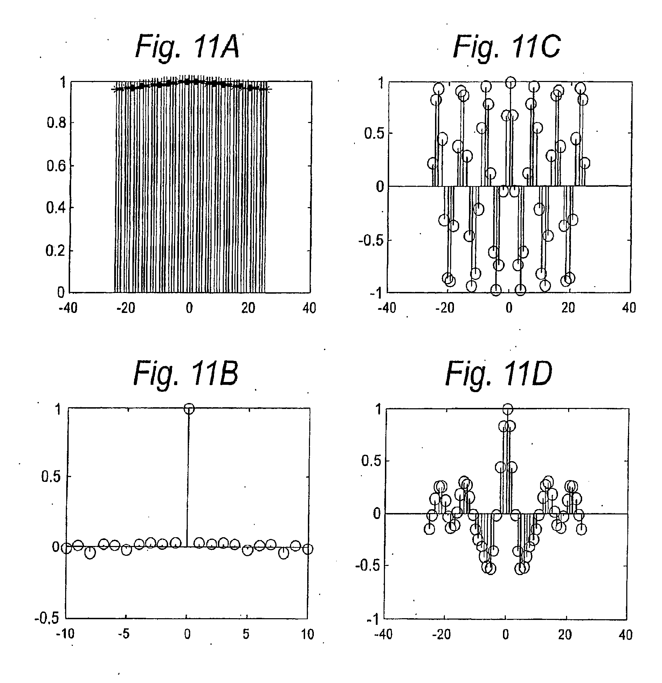

Figs. 11A-11D provide sample experimentally-obtained correlation snapshots. These correlation snapshots, or fingerprints of an event, can be stored as reference fingerprints or correlation curves. Observed/detected correlation snapshots (e.g., autocorrelation curves) can be compared to these reference fingerprints to determine the type of event occurring. For instance, Fig. 11A is an experimentally-obtained autocorrelation snapshot indicative of heavy rain. Fig. 11B is an experimentally-obtained autocorrelation snapshot indicative of a light mist. Fig. 11C is an experimentally-obtained autocorrelation snapshot indicative of CB radio interference. Fig. 11D is an experimentally-obtained autocorrelation snapshot indicative of a grounded body with a voltage. It will be appreciated that these fingerprints are provided as examples and reflect experimentally-obtained data. Actual events may differ in various characteristics. Thus, , when it is determined that there is a match or substantial match between the autocorrelation curve associated with the autocorrelated data from the Fig. 4-5 circuit and a predetermined non-moisture autocorrelation curve such as that of Fig. 11C or Fig. 11D, then this may be considered a no-rain event and it may be indicated that it is not raining, wipers may parked and/or not actuated (see step S808). However, when it is determined that there is a match or substantial match between the autocorrelation curve associated with the autocorrelated data from the Fig. 4-5 circuit and a predetermined moisture-related autocorrelation curve such as that of Fig. 11A or Fig. 11B, then this may be considered a rain event and it may be indicated that it is raining, wipers may actuated and/or kept moving. In addition to the predetermined autocorrelation curves of Figs. 11A-11D, other reference fingerprints may be stored and/or compared with observed correlation snapshots in other example embodiments of this invention.

Turning back to Fig. 8, in step S806 it is determined whether each of the three conditions set forth in the bottom portion of the S804 box is met. In particular, it is determined in S806 whether each of the following is met: (a) the autocorrelated data has no negative values; (b) a gradient of an autocorrelation curve associated with said autocorrelated data is greater than a predetermined value such as one; and (c) the shape of the autocorrelation curve associated with the autocorrelated data from the Fig. 4-5 circuit is different than a predetermined autocorrelation curve associated with non-disturbed autocorrelation data. If they are not all met, this is an indication of a non-rain event and the process moves to step S808 where the vehicle wiper(s) are parked (if they were moving) or are kept off, and begins initialization S800 again. However, if all of these requirements are met in S806, then the process moves to S810 and the vehicle's wipers (e.g., windshield wipers) are activated at their lowest speed.

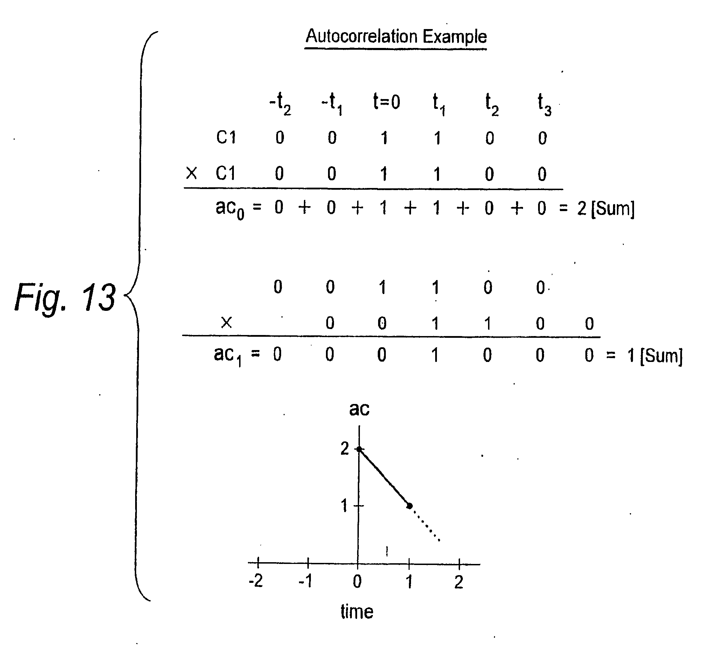

Fig. 13 illustrates an example of autocorrelation. In Fig. 13, the values from (or relating to) sensing capacitor C1 are, at sequential times-t2, -t1, t0, t1, t2 and t3 are 0, 0, 1, 1, 0 and 0, respectively. Autocorrelation for time 0 (aco) is determined by multiplying the values relating to C1 in a non-offset manner, and then adding or summing the results. It can be seen in Fig. 13 that aco is equal to 2 in this instance. Thus, on the autocorrelation graph at the bottom of Fig. 13, an entry in the graph at time 0 is made for an autocorrelation value of 2. Note that the autocorrelation graph at the bottom of Fig. 13 is similar, but simpler, that the autocorrelation graph in Fig. 10 and the autocorrelation values may be obtained for Fig. 10 in a like manner. Next, still referring to Fig. 13, autocorrelation is performed using the capacitance values relating to C1 for the next point in time to obtain autocorrelation value ac1. This next autocorrelation value (ac1) is obtained by shifting the bottom row sequence of values for C1 relative to the top row as shown in Fig. 13, and then multiplying the values in the rows which line up with each other and summing the results. Fig. 13 illustrates that ac1 is equal to 1 for time 1. Thus, this autocorrelation value of 1 for time t1 may be entered in the graph at the bottom of Fig. 13 and a line is drawn between the two entered data points for purposes of example and understanding. The, for the next time value (or lag), the bottom row is again shifted another segment over relative to the top row and the process repeated, and so forth. It can be seen that the autocorrelation plots in Fig. 10 may be obtained in a similar manner. In Fig. 13, it will be appreciated that cross-correlation may be performed by replacing the C1-related values in the bottom row with values from or related to another capacitor such as C2 (or C3 or C4).

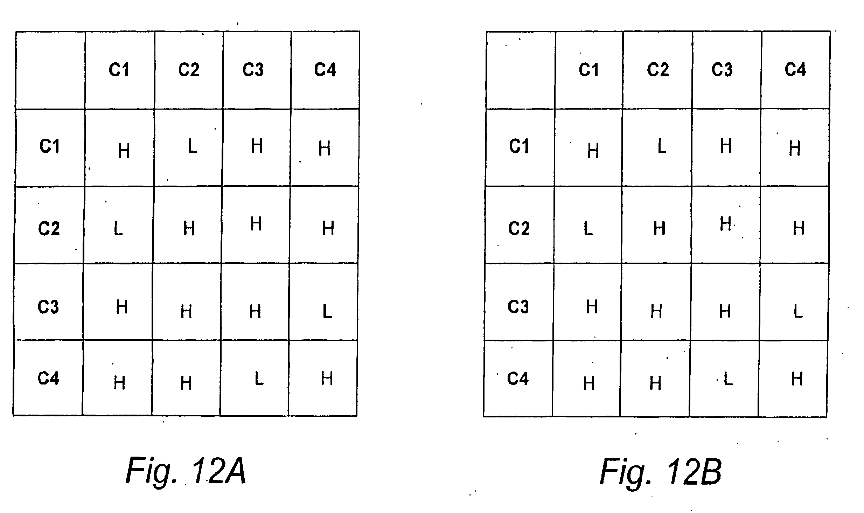

Examining autocorrelation and/or cross-correlation also can help distinguish between, for example, light rain and heavy rain. For example, if only the autocorrelation in time is high (and crosscorrelation is low), then there probably is only light rain. Fig. 12A is an exemplary correlation matrix showing light rain. Of note in Fig. 12A is that the correlations between C1 and C1, C2 and C2, C3 and C3, and C4 and C4 (these are autocorrelations) over a given time period are high, while the rest of the correlations (the cross-correlations) are low. By hypothesis and confirmed experimental data, a matrix of this sort would indicate a light rain.

On the other hand, if both autocorrelation and cross-correlation in time between capacitor signals are high, there is probably fast rain. Fig. 12B is an exemplary correlation matrix showing heavy rain. In Fig. 12B, not only are the autocorrelations of individual capacitors high (i.e., the autocorrelations are the correlations between CI and C1, C2 and C2, C3 and C3, and C4 and C4), cross-correlations between different capacitors also are generally high (the correlations in Fig. 12B going diagonally from the upper-left to the bottom-right are the autocorrelations, and the rest are the cross-correlations). By hypothesis and confirmed experimental data, a matrix of this sort would indicate a fast rain. The degree of cross-correlation can be quantized to determine the relative speed of the rain. This data can, in turn, be used to trigger various wiper speeds, as appropriate for the speed of the rain. For instance, the more cross correlations that are high, the higher the wiper speed to be used.

More systematically, in step S812, cross-correlations are computed (correlations between data relating to different capacitors), and the two sides of the cross-correlation curve are used to determine a symmetry level L. If the symmetry level is lower than a predefined threshold $t_{min}$, step S814 directs the system to step S816 where wipers are activated at the lowest speed, and the system is returned to initialization step S800. If the symmetry level is greater than $t_{min}$ but less than an arbitrary value t, step S818 directs the system to step S820 where wipers are activated at a faster or medium speed, and the system is returned to initialization step S800. It will be appreciated that a plurality of arbitrary values $t_i$ may be specified, and a symmetry level falling between $t_i$ and $t_{i+1}$ will activate an appropriate corresponding wiper speed and then return the system to initialization step S800. Finally, in step S822, if the symmetry level is above a predefined level $t_{max}$, step S822 directs the system to step S824 where wipers are activated at the highest speed, and the system is returned to initialization step S800. Thus, correlations from the data output from the Fig. 4-5 circuit can be used to adjust wiper speed. The more cross correlations that are high, the higher the wiper speed to be used due to the likelihood of heavier rain.

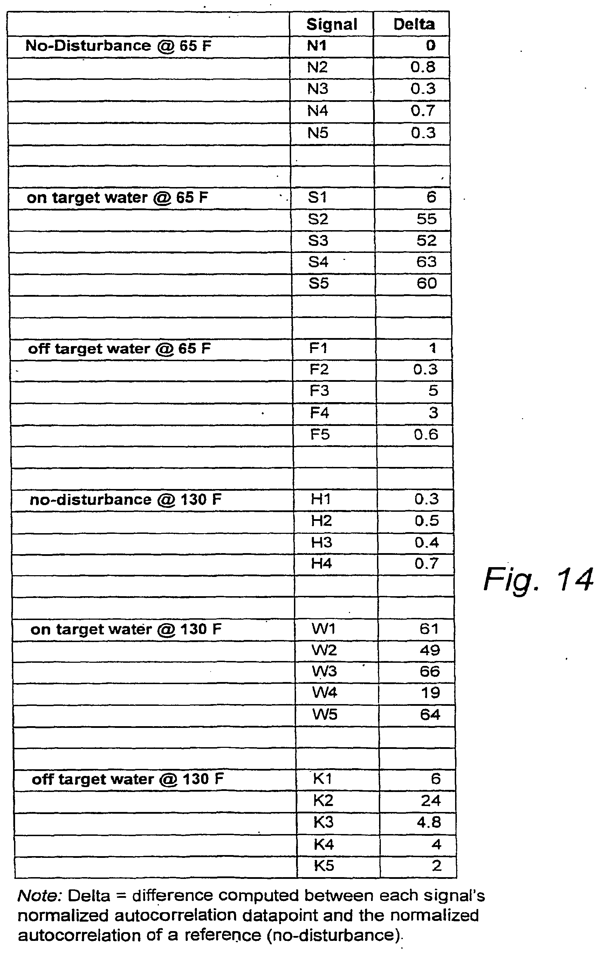

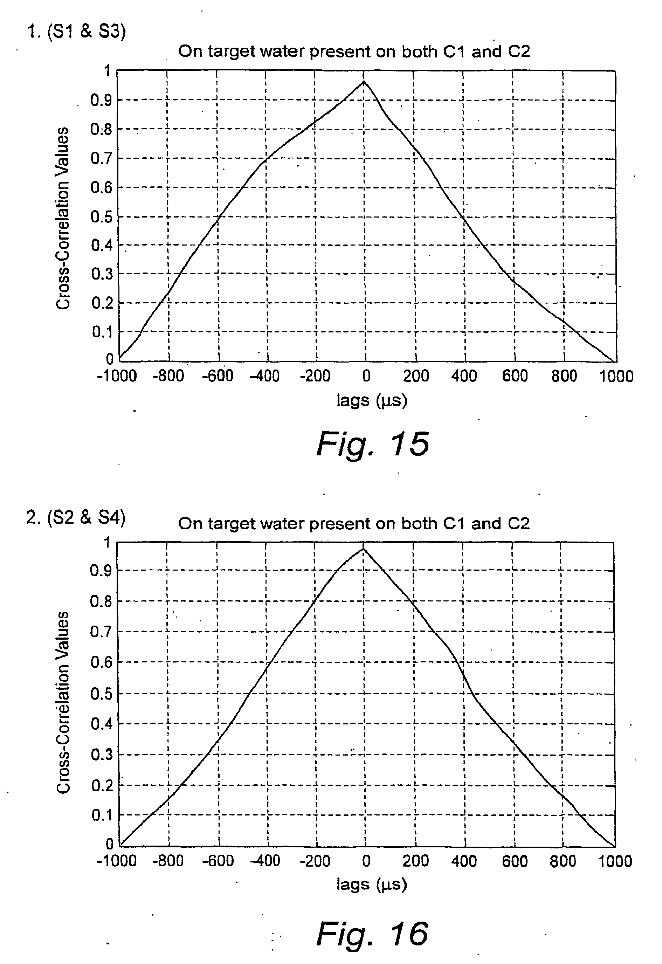

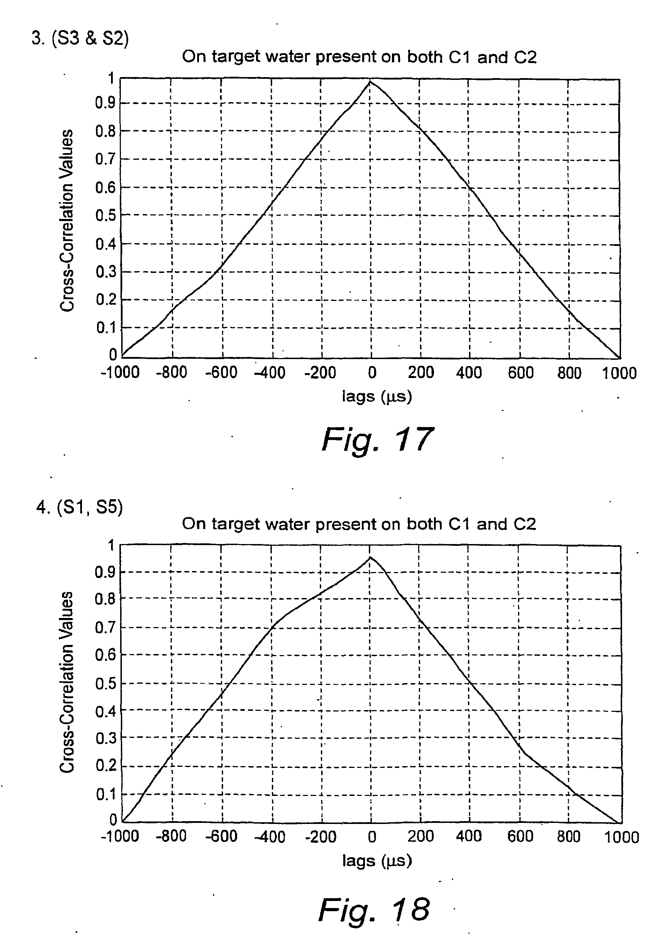

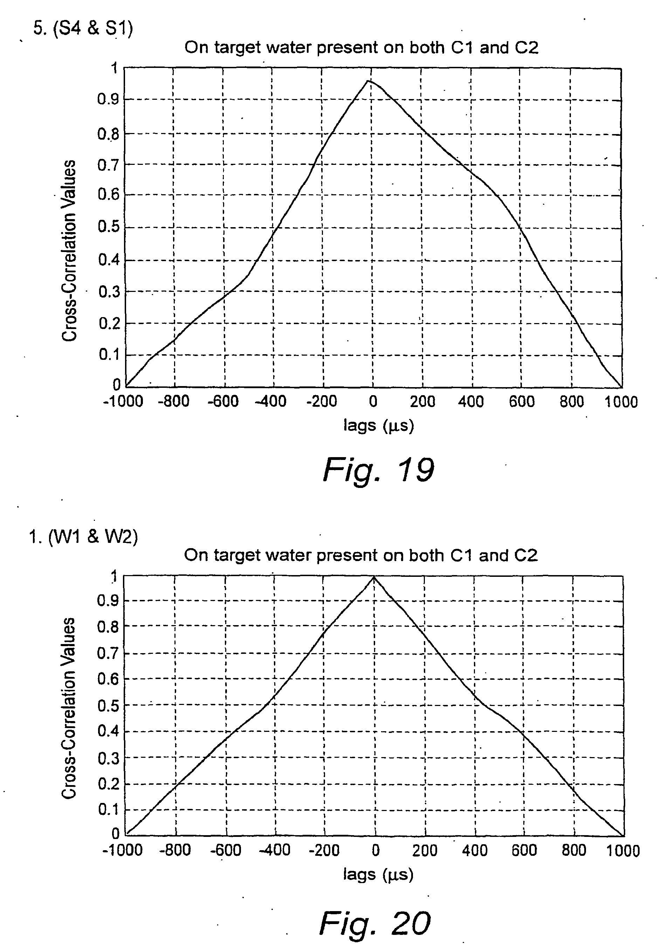

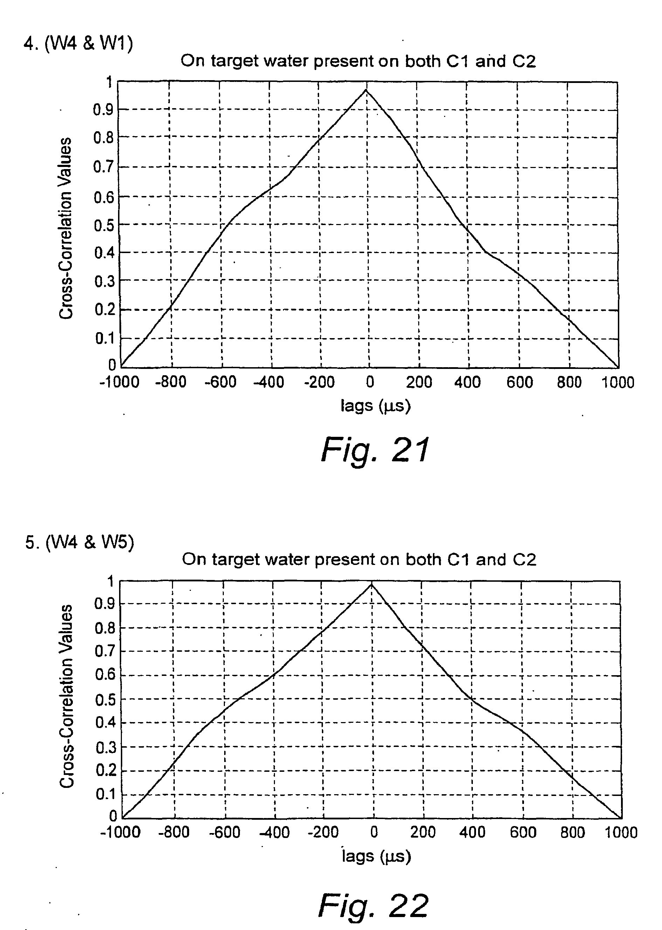

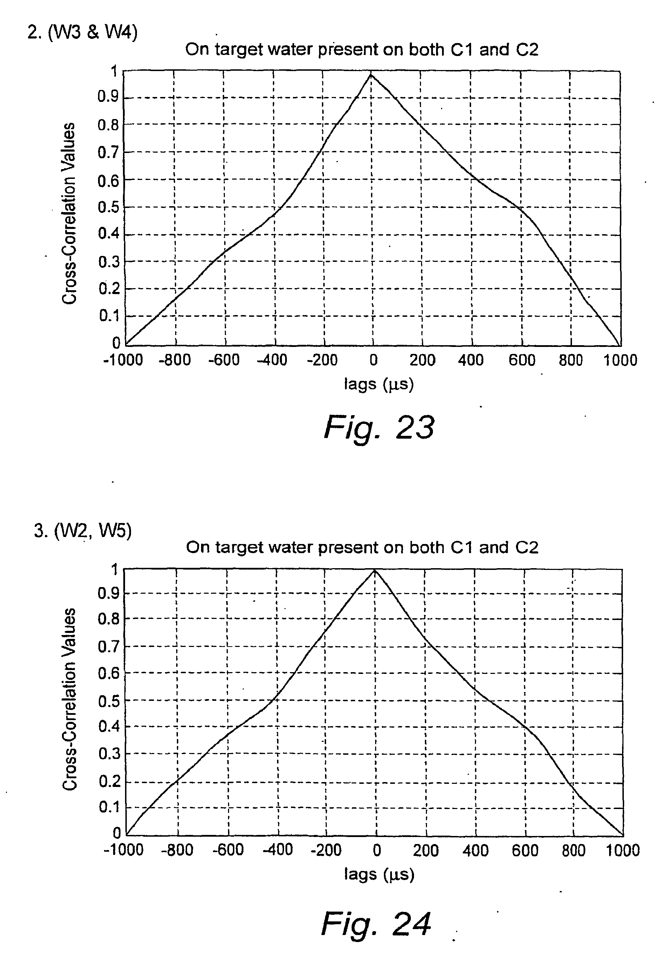

Figs. 14-24 illustrate examples of cross-correlation performed Fig. 14 sets forth cross-correlation data, whereas Figs. 15-24 illustrate cross-correlation graphs of certain of the data from Fig. 14 where rain is detected. In Figs. 15-24, each lag on the horizontal axis is one microsecond (1 $\mu$s) for purposes of example, and sampling was performed every one microsecond. As explained above with respect to Fig. 13, in Figs. 15-24 at time = 0 (lag 0), there is no shift in time of the values from the different capacitors being correlated. Fig. 14 illustrates that when rain was present (see signals S1-S5 and W1-W5), the delta signals relating to autocorrelation were high. Figs. 15-24 are cross-correlation plots relating to these signals. It is helpful to look for symmetry between the plots on the left and right hand sides of each of Figs. 15-24 (one side of zero is compared to the other side of zero). Generally speaking, if there is symmetry about the zero lag axis, there is not much cross-correlation which indicates that the detected rain is not very hard. However, if there is asymmetry about the zero lag axis, then this means more cross-correlation and indicates that the rain is hard or harder. For example, note the asymmetry in Figs. 18, 19 and 23 about the zero lag axis due to the bumps or valleys on one or both sides. More cross-correlation indicates that the rain drops are moving from one capacitor's sensing area to another capacitor's sensing area. In this respect, each interaction of a rain drop and the surface of a windshield has its own correlation signature in the time domain. High cross-correlation indicates that the same drop is being detected at different capacitors, at different points in time (e.g., see Fig. 9 also). It is noted that the lower case "t" in Fig. 9 is the same as the lags axis in Figs. 15-24.

Thus, it will be appreciated that The rain sensor can detect rain on a vehicle window without the need for a reference capacitor. Spatial temporal correlation may be used. All capacitors, or a plurality of capacitors, in the sensing array may be identical or substantially identical in shape in certain example embodiments. For purposes of example, at a given point in time (e.g., tl), the system may compare C1-relates values with C2 related values, and/or other capacitor related values. For this time t1, the system may also compare C1-related values with itself (autocorrelation), and may also compare autocorrelation for C1 with autocorrelation for C2 and/or other sensing capacitor(s).

While the invention has been described in connection with what is presently considered to be the most practical and preferred embodiment, it is to be understood that the invention is not to be limited to the disclosed embodiment, but on the contrary, is intended to cover various modifications included within the scope of the appended claims.

**Claims**

1. A rain sensor comprising:

   a sensing circuit comprising at least a first sensing capacitor (C1) adapted to be supported by a vehicle window, the first sensing capacitor (C1) being sensitive to moisture on an external surface of the window;
   the first sensing capacitor (C1) having first and second spaced apart capacitor electrodes (7, 8) that are substantially coplanar; and **characterized in that**
   at least part of the first sensing capacitor (C1) has a fractal geometry, and wherein the first and second capacitor electrodes (7, 8) each have a meandering shape and are substantially parallel to each other.

2. The rain sensor of claim 1, wherein the fractal geometry is selected from the group consisting of a Hilbert fractal and a Cantor fractal.

3. The rain sensor of claim 1, wherein the fractal geometry is such that the first sensing capacitor (C1) functions as its own Faraday shield or quasi-Faraday shield so as to reduce adverse effects of EMI interference.

4. The rain sensor of claim 1, wherein the first sensing capacitor (C1) comprises a fractal geometry so that lateral flux caused by the fractal geometry allows the capacitor to be sensitive to moisture on the external surface of the window that is not located directly over the first sensing capacitor.

5. The rain sensor of claim 1, wherein the window is one of a vehicle windshield, a vehicle backlite, and/or a vehicle sunroof.

6. The rain sensor of claim 1, wherein the rain sensor comprises at least first and second sensing capacitors (C1, C2) of approximately the same size that are sensitive to moisture on the external surface of the window, and wherein each of the first and second sensing capacitors (C1, C2) comprise fractal geometry.

7. The rain sensor of claim 1, wherein the rain sensor includes a plurality of sensing capacitors (C1, C2, C3, C4) that have fractal geometry, wherein the plurality of sensing capacitors are arranged in an array around a centrally located contact pad.

8. The rain sensor of claim 1, wherein the overall length of the first sensing capacitor (C1) is from about 25 to 200 mm, more preferably from about 30 to 90 mm.

9. The rain sensor of claim 1, further comprising means for auto correlating data relating to and/or from the sensing capacitor (C1) to obtain autocorrelated data, and means for determining based at least on said autocorrelated data whether moisture is present on the external surface of the window.

10. The rain sensor of claim 1, wherein the first and second spaced apart capacitor electrodes (7, 8) are electrically conductive and are supported by an interior glass sheet (1) of a vehicle windshield, wherein the vehicle windshield comprises both the interior glass sheet (1) and an exterior glass sheet (2) and whereby preferably the first and second spaced apart capacitor electrodes (7, 8) are located on the surface of the interior glass sheet (1) closest to an interior of the vehicle.

11. The rain sensor of claim 1, wherein an opaque layer (12) is provided on the window so as to shield the first sensing capacitor (C1) from a view of a passenger inside the vehicle.

12. The rain sensor of claim 1, wherein the at least one sensing capacitor is part of a sensing circuit, the sensing circuit further comprising at least one mimicking capacitor that mimics at least charging and/or discharging of the first sensing capacitor, wherein a writing pulse causes at least the first sensing capacitor to be charged and an erasing pulse causes each of the first sensing capacitor and the mimicking capacitor to substantially discharge; wherein presence of rain on the external surface of the window in a sensing field of the first sensing capacitor causes a voltage at an output electrode of the mimicking capacitor to fluctuate in a manner proportional to fluctuation of voltage at an output electrode of the first sensing capacitor, even though the rain is not present in a field of the mimicking capacitor; and wherein rain is detected based on an output signal from the output electrode of the mimicking capacitor, wherein the output signal is read at least between an end of the writing pulse and a beginning of the erase pulse.

13. The rain sensor of claim 1, wherein the first capacitor electrode (7) of the sensing capacitor receives a charging signal and the second capacitor electrode (8) of the sensing capacitor is spaced apart from the first capacitor electrode (7); and wherein the second capacitor electrode (8) is floating so that the sensing capacitor is isolated from ground.

14. The rain sensor of claim 1, further comprising at least one correlating engine that (a) autocorrelates information from, and/or relating to, the sensing capacitor to determine whether rain is present on the exterior surface of the window, and/or (b) cross-correlates information from, and/or relating to, the sensing capacitor to determine how fast to operate at least one wiper of a vehicle and/or an amount of rain on the external surface of the window.

**Patentansprüche**

1. Ein Regensenor aufweisend:

   Eine Sensorschaltung aufweisend zumindest einen ersten Sensorkondensator (C1) der eingerichtet ist, um von einem Fahrzeugfenster getragen zu werden, wobei der erste Sensorkondensator (C1) empfindlich für Feuchtigkeit an einer externen Oberfläche des Fensters ist;
   wobei der erste Sensorkondensator (C1) erste und zweite voneinander beabstandete Kondensatorelektroden (7, 8) aufweist, die im Wesentlichen koplanar sind; und
   **dadurch gekennzeichnet, dass** zumindest ein Teil des ersten Sensorkondensators (C1) eine fraktale Geometrie aufweist, und

wobei die ersten und zweiten Kondensatorelektroden (7, 8) jeweils eine mäandernde Form haben und im Wesentlichen parallel zueinander sind.

2. Der Regensensor nach Anspruch 1 wobei die fraktale Geometrie aus der Gruppe bestehend aus einem Hilbert-Fraktal und einem Kantor-Fraktal ausgewählt ist.

3. Der Regensensor nach Anspruch 1 wobei die fraktale Geometrie derart ist, dass der erste Sensorkondensator (C1) als seine eigene Faraday-Abschirmung oder Quasi-Faraday-Abschirmung dient, um nachteilige Effekte einer EMI-Interferenz zu reduzieren.

4. Der Regensensor nach Anspruch 1, wobei der erste Sensorkondensator (C1) eine fraktale Geometrie aufweist, so dass die laterale Flussdichte, die durch die fraktale Geometrie verursacht wird, es dem Kondensator erlaubt empfindlich für Feuchtigkeit an der äußeren Oberfläche des Fenster zu sein, die nicht direkt über dem ersten Sensorkondensator angeordnet ist.

5. Der Regensensor nach Anspruch 1, wobei das Fenster eine Fahrzeugwindschutzscheibe, eine Fahrzeugrückscheibe und/oder ein Schiebedach eines Fahrzeugs ist.

6. Der Regensensor nach Anspruch 1, wobei der Regensensor zumindest erste und zweite Sensorkondensatoren (C1, C2) von in etwa derselben Größe umfasst, die empfindlich für Feuchtigkeit an der äußeren Oberfläche des Fensters sind, und wobei jeder der ersten und zweiten Sensorkondensatoren eine (C1, C2) fraktale Geometrie aufweist.

7. Der Regensensor nach Anspruch 1, wobei der Regensensor eine Mehrzahl von Sensorkondensatoren (C1, C2, C3, C4) umfasst, die eine fraktale Geometrie aufweisen, wobei die Mehrzahl von Sensorkondensatoren in einer Anordnung um ein zentral angeordnetes Kontaktfeld herum angeordnet sind.

8. Der Regensensor nach Anspruch 1, wobei die Gesamtlänge des ersten Sensorkondensators (C1) von etwa 25 bis 200 mm beträgt, bevorzugt von etwa 30 bis 90 mm.

9. Der Regensensor nach Anspruch 1 weiter umfassend Mittel zur Autokorrelation von Daten, die zu und/oder von dem Sensorkondensator (C1) gehören, um autokorrelierte Daten zu erhalten, und Mittel zur Bestimmung basierend auf zumindest diesen autokorrelierten Daten, ob Feuchtigkeit an der äußeren Oberfläche des Fensters vorhanden ist.

10. Der Regensensor nach Anspruch 1, wobei die ersten und zweiten voneinander beabstandeten Kondensatorelektroden (7, 8) elektrisch leitfähig sind und von einer inneren Glasplatte (1) von einem Fahrzeugfenster getragen sind, wobei das Fahrzeugfenster die innere Glasplatte (1) und eine äußere Glasplatte (2) beide umfasst und wobei vorzugsweise die ersten und zweiten voneinander beabstandeten Kondensatorelektroden (7, 8) auf der Oberfläche der inneren Glasplatte (1) am nächsten an ein Inneres des Fahrzeugs angeordnet sind.

11. Der Regensensor nach Anspruch 1, wobei eine opake Schicht (12) am Fenster vorgesehen ist um den ersten Sensorkondensator (C1) von einer Sicht eines Fahrzeuginsassen im Inneren des Fahrzeugs abzuschirmen.

12. Der Regensensor nach Anspruch 1, wobei der zumindest eine Sensorkondensator Teil einer Sensorschaltung ist, wobei die Sensorschaltung weiter zumindest einen Nachahmungskondensator umfasst, der zumindest ein Laden und/oder Entladen des ersten Sensorkondensators nachahmt, wobei ein Schreibpuls veranlasst, dass zumindest der erste Sensorkondensator aufgeladen wird, und ein Löschpuls veranlasst, dass sowohl der erste Sensorkondensator als auch der Nachahmungskondensator im Wesentlichen entladen wird; wobei die Anwesenheit von Regen auf der äußeren Oberfläche des Fensters in einem Sensorfeld des ersten Sensorkondensators dazu führt, dass eine Spannung an einer Ausgangselektrode des Nachahmungskondensators in einer Weise proportional zur Spannungsschwankung an einer Ausgangselektrode des ersten Sensorkondensator schwankt, selbst wenn der Regen nicht in einem Feld des Nachahmungskondensators vorliegt; und wobei Regen basierend auf einem Ausgangssignal von der Ausgangselektrode des Nachahmungskondensators detektiert wird, wobei das Ausgangssignal zumindest zwischen einem Ende des Schreibpulses und einem Beginn des Löschpulses gelesen wird.

13. Der Regensensor nach Anspruch 1, wobei die erste Kondensatorelektrode (7) von dem Sensorkondensator ein Ladesignal empfängt und die zweite Kondensatorelektrode (8) von dem Sensorkondensator beabstandet ist von der ersten Kondensatorelektrode (7); und wobei die zweite Kondensatorelektrode (8) nicht geerdet ist so dass der Sensorkondensator von Erde isoliert ist.

14. Der Regensensor nach Anspruch 1, weiter aufweisend zumindest eine Korrelations-Engine, die (a) Informationen von und/oder in Bezug stehend zu dem Sensorkondensator autokorreliert, um zu bestimmen, ob Regen auf der äußeren Oberfläche des Fenster vorhanden ist und/oder (b) Informationen von und/oder in Bezug stehend mit dem Sensorkondensator kreuzkorreliert, um zu bestimmen, wie schnell zumindest ein Wischer eines Fahrzeugs bestrieben werden soll und/oder eine Menge an Regen auf der äußeren Oberfläche des Fensters zu bestimmen.

**Revendications**

1. Un capteur de pluie comprenant :

   un circuit de détection comprenant au moins un premier condensateur de détection (C1) apte à être supporté par une vitre de véhicule, le premier condensateur de détection (C1) étant sensible à de l'humidité sur une surface externe de la vitre ;
   le premier condensateur de détection (C1) possédant des première et seconde électrodes de condensateur espacées l'une de l'autre (7, 8) qui sont substantiellement coplanaires ; et **caractérisé en ce que**
   au moins une partie du premier condensateur de détection (C1) présente une géométrie fractale, et les première et seconde électrodes de condensateur (7, 8) ayant chacune une forme en méandre et étant substantiellement parallèles l'une à l'autre.

2. Le capteur de pluie de la revendication 1, dans lequel la géométrie est fractale et choisie dans le groupe formé par une fractale de Hilbert et une fractale de Cantor.

3. Le capteur de pluie de la revendication 1, dans lequel la géométrie fractale est telle que le premier condensateur de détection (C1) joue pour lui-même un rôle de cage de Faraday ou de quasi-cage de Faraday de manière à réduire les effets néfastes des interférences EMI.

4. Le capteur de pluie de la revendication 1, dans lequel le premier condensateur de détection (C1) comprend une géométrie fractale telle que le flux latéral provoqué par la géométrie fractale rende le condensateur sensible à de l'humidité sur la surface externe de la vitre qui ne se trouve pas directement au-dessus du premier condensateur de détection.

5. Le capteur de pluie de la revendication 1, dans lequel la vitre est l'une d'entre un pare-brise de véhicule, une lunette arrière de véhicule et/ou un pavillon de véhicule.

6. Le capteur de pluie de la revendication 1, dans lequel le capteur de pluie comprend au moins un premier et un second condensateur de détection (C1, C2) ayant approximativement la même dimension qui sont sensibles à de l'humidité sur la surface externe de la vitre, et dans lequel chacun des premier et second condensateurs de détection (C1, C2) comprend une géométrie fractale.

7. Le capteur de pluie de la revendication 1, dans lequel le capteur de pluie comprend une pluralité de condensateurs de détection (C1, C2, C3, C4) qui possèdent une géométrie fractale, la pluralité de condensateurs de détection étant configurée en un réseau autour d'une plage de contact située centralement.

8. Le capteur de pluie de la revendication 1, dans lequel la longueur totale du premier condensateur de détection (C1) est comprise entre environ 25 et 200 mm, plus préférentiellement entre environ 30 et 90 mm.

9. Le capteur de pluie de la revendication 1, comprenant en outre des moyens pour autocorréler des données relatives au, et/ou provenant du, condensateur de détection (C1) afin d'obtenir des données autocorrélées, et des moyens de détermination en fonction desdites données autocorrélées du point de savoir si de l'humidité est ou non présente sur la surface externe de la vitre.

10. Le capteur de pluie de la revendication 1, dans lequel les première et seconde électrodes de condensateur à distance l'une de l'autre (7, 8) sont électriquement conductrices et sont supportées par une feuille de verre intérieure d'un pare-brise de véhicule, le pare-brise de véhicule comprenant à la fois la feuille de verre interne (1) et une feuille de verre externe (2), et de sorte que préférentiellement les première et seconde électrodes de condensateur à distance l'une de l'autre (7, 8) soient situées sur la surface de la feuille de verre interne (1) au plus près d'un côté intérieur du véhicule.

11. Le capteur de pluie de la revendication 1, dans lequel une couche opaque (12) est formée sur la vitre de manière à isoler le premier condensateur de détection (C1) de la vue d'un passager à l'intérieur du véhicule.

12. Le capteur de pluie de la revendication 1, dans lequel le au moins un condensateur de détection fait partie d'un circuit de détection, le circuit de détection comprenant en outre au moins un condensateur de réplication qui réplique au moins la charge et/ou la décharge du premier condensateur de détection, dans lequel une impulsion d'écriture fait en sorte que le premier condensateur de détection soit chargé et une impulsion d'effacement fait en sorte que chacun du premier condensateur de détection et du condensateur de réplication se décharge substantiellement ; dans lequel la présence de pluie sur la surface externe de la vitre dans un champ de détection du premier condensateur de détection fait en sorte qu'une tension sur une électrode de sortie du condensateur de réplication fluctue d'une manière qui est proportionnelle à la fluctuation de tension sur une électrode de sortie du premier condensateur de détection, même si de la pluie n'est pas présente dans un champ du condensateur de réplication ; et dans lequel de la pluie est détectée en fonction d'un signal de sortie provenant de l'électrode de sortie du condensateur de réplication, dans lequel le signal de sortie est lu au moins entre une fin de l'impulsion d'écriture et un début de l'impulsion d'effacement.

13. Le capteur de pluie de la revendication 1, dans lequel la première électrode de condensateur (7) du condensateur de détection reçoit un signal de charge et la seconde électrode de condensateur (8) du condensateur de détection est disposée à distance de la première électrode de condensateur (7) ; et dans lequel la seconde électrode de condensateur (8) est flottante de sorte que le condensateur de détection soit isolé de la masse.

14. Le détecteur de pluie de la revendication 1, comprenant en outre au moins un moteur de corrélation qui a) autocorrèle des informations provenant du, et/ou en relation avec le, condensateur de détection pour déterminer si de la pluie est ou non présente sur la surface externe de la vitre, et/ou b) intercorrèle des informations provenant du, et/ou en relation avec le, condensateur de détection pour déterminer la vitesse à laquelle il faut faire fonctionner au moins un essuie-glace d'un véhicule, et/ou une quantité de pluie sur la surface externe de la vitre.

*Fig. 1A*

Fig. 1B

Fig. 1C

Electric Sensing
Field Line

Vehicle Exterior

2 — Glass Substrate

4 — Low-E Coating (Optional)

3 — Polymer Interlayer    7 — ⎤    ⎡ — 8

1 — Glass Substrate

Opaque Layer

Vehicle Interior

9

**Fig. 1D**

Electric Sensing
Field Line

Vehicle Exterior    7

2 — Glass Substrate    8

3 — Polymer Interlayer

4 — Optional Low-E Coating

1 — Glass Substrate

Opaque Layer

Vehicle Interior

9

**Fig. 1E**

Electric Sensing
Field Line

Vehicle Exterior

2 — Glass Substrate

4 — Optional Low-E Coating

3 — Polymer Interlayer

1 — Glass Substrate

Support

Vehicle Interior

12        7        9        8

C1,C2,C3 or C4

*Fig. 1F*

Silver Frit Width = 1 mm
24

Contact Pad
28

Gap = 0.6 mm
22

C2

C3

C1

C4

Black Frit
9

Each Capacitor C1- C4
Length = 50mm

*Fig. 2A*

Outer line width = 2mm
Inner line width = 1mm
Air gap = 0.6mm

All units are in mm

Inner circle diameter = 6mm
Outer circle diameter = 13mm
Distance between contact pads = 1mm

*Fig. 2B*

*Fig. 3*

$$Vout \approx k.\frac{W_1 L_2}{W_2 L_1}\left(\frac{Cs}{Cint}\right)\left(V_{cc}-|V_T|\right)$$

Fig. 4

*Fig. 5*

$$Vout \approx k.\frac{W_6 L_5}{L_6 W_5}\left(\frac{C_s}{C_{int}}\right)\left(Vcc - |V_t|\right)e^{\frac{t}{R_{on}C_{int}}}$$

Fig. 6

Fig. 7

```
                                    ┌──────────────────────┐
                                    │  Start/Initialization │
                                    │   -Clear Buffer       ├── S800
                                    │ -Sigma Delta Modulation│
                                    └──────────┬───────────┘
                                               │
                                               ▼
                                    ┌──────────────────────┐
                    S808            │ Read multiple channels │
                                    │       inputs          ├── S802
         ┌─────────────────┐        │     C1,C2,...Ck       │
         │  Park Wipers    │        └──────────┬───────────┘
         │    & Stop       │                   │
         └─────────────────┘                   ▼
                                    ┌────────────────────────────────┐ S804
                                    │      Autocorrelator Engine      │
                                    │ (to identify rain from other    │
                                    │         disturbances)           │
                                    │         3 conditions            │
                                    │ A. Rxx has no negative values   │
                                    │ B. The gradient is greater than 1│
                                    │ C. The shape of Rxx curve is     │
                                    │    different from database data  │
                                    │    (normalized non-disturbed     │
                                    │    autocorrelation)              │
                                    └────────────────┬───────────────┘
                                                     │
                                                     ▼
                              No           ╱◇  Are all conditions  ◇╲ S806
                   ◄─────────────────────  ◇       met?            ◇
                                            ╲◇                    ◇╱
                                                     │ Yes    S810
                                                     ▼
                                    ┌──────────────────────┐
                                    │  Wiper @ Lowest Speed │
                                    └──────────┬───────────┘
                                               │          S812
                                               ▼
                                    ┌────────────────────────────────┐
                                    │ Cross-Correlator Engine (to     │
                                    │      detect rain levels)        │
                                    │    Compare the two sides of     │
                                    │    the cross-correlation curve  │
                                    │  Determine the symmetry level: L │
                                    └────────────────┬───────────────┘
   S816                                              │
   ┌──────────────┐         Yes                      ▼           S814
   │ Lowest Speed │◄──────────────  ◇  Is L< t_min?  ◇
   │  Speed #1    │                 ◇                ◇
   └──────────────┘                        │ No
   S820                                     ▼           S818
   ┌──────────────┐         Yes    ◇ Is t_min < L<t? ◇
   │   Speed #2   │◄──────────────  ◇                ◇
   └──────────────┘                        ┊ No
   S824                                     ▼           S822
   ┌──────────────┐         Yes    ◇  Is L> t_max?   ◇
   │ Highest Speed│◄──────────────  ◇                ◇
   │  Speed #N    │
   └──────────────┘
```

FIG. 8

31

*Fig. 9*

Fig. 10

*Fig. 11C*

*Fig. 11D*

*Fig. 11A*

*Fig. 11B*

34

|  | C1 | C2 | C3 | C4 |
|---|---|---|---|---|
| C1 | H | L | H | H |
| C2 | L | H | H | H |
| C3 | H | H | H | L |
| C4 | H | H | L | H |

*Fig. 12B*

|  | C1 | C2 | C3 | C4 |
|---|---|---|---|---|
| C1 | H | L | H | H |
| C2 | L | H | H | H |
| C3 | H | H | H | L |
| C4 | H | H | L | H |

*Fig. 12A*

EP 2 218 616 B1

**Autocorrelation Example**

|    |    | $-t_2$ | $-t_1$ | $t=0$ | $t_1$ | $t_2$ | $t_3$ |
|----|----|--------|--------|-------|-------|-------|-------|
|    | C1 | 0 | 0 | 1 | 1 | 0 | 0 |
| × | C1 | 0 | 0 | 1 | 1 | 0 | 0 |

$$ac_0 = 0 + 0 + 1 + 1 + 0 + 0 = 2 \text{ [Sum]}$$

|    | $-t_2$ | $-t_1$ | $t=0$ | $t_1$ | $t_2$ | $t_3$ |   |
|----|--------|--------|-------|-------|-------|-------|---|
|    | 0 | 0 | 1 | 1 | 0 | 0 |   |
| × |   | 0 | 0 | 1 | 1 | 0 | 0 |

$$ac_1 = 0 \quad 0 \quad 0 \quad 1 \quad 0 \quad 0 \quad 0 = 1 \text{ [Sum]}$$

*Fig. 13*

|  | Signal | Delta |
|---|---|---|
| No-Disturbance @ 65 F | N1 | 0 |
|  | N2 | 0.8 |
|  | N3 | 0.3 |
|  | N4 | 0.7 |
|  | N5 | 0.3 |
|  |  |  |
|  |  |  |
| on target water @ 65 F | S1 | 6 |
|  | S2 | 55 |
|  | S3 | 52 |
|  | S4 | 63 |
|  | S5 | 60 |
|  |  |  |
|  |  |  |
| off target water @ 65 F | F1 | 1 |
|  | F2 | 0.3 |
|  | F3 | 5 |
|  | F4 | 3 |
|  | F5 | 0.6 |
|  |  |  |
|  |  |  |
| no-disturbance @ 130 F | H1 | 0.3 |
|  | H2 | 0.5 |
|  | H3 | 0.4 |
|  | H4 | 0.7 |
|  |  |  |
|  |  |  |
| on target water @ 130 F | W1 | 61 |
|  | W2 | 49 |
|  | W3 | 66 |
|  | W4 | 19 |
|  | W5 | 64 |
|  |  |  |
|  |  |  |
| off target water @ 130 F | K1 | 6 |
|  | K2 | 24 |
|  | K3 | 4.8 |
|  | K4 | 4 |
|  | K5 | 2 |

*Fig. 14*

*Note:* Delta = difference computed between each signal's normalized autocorrelation datapoint and the normalized autocorrelation of a reference (no-disturbance).

1. (S1 & S3)

On target water present on both C1 and C2

Fig. 15

2. (S2 & S4)

On target water present on both C1 and C2

Fig. 16

3. (S3 & S2)

Fig. 17

4. (S1, S5)

Fig. 18

5. (S4 & S1)

On target water present on both C1 and C2

Fig. 19

1. (W1 & W2)

On target water present on both C1 and C2

Fig. 20

4. (W4 & W1)

On target water present on both C1 and C2

*Fig. 21*

5. (W4 & W5)

On target water present on both C1 and C2

*Fig. 22*

2. (W3 & W4)

Fig. 23

3. (W2, W5)

Fig. 24

*Fig. 25*

Fig. 26

EP 2 218 616 B1

Fig. 27

*Fig. 28A*

*Fig. 28B*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003080871 A1
- DE 9403135 U
- US 6373263 B, Netzer
- US 6686050 B
- US 6723211 B
- US 6782718 B
- US 6749941 B
- US 6730352 B
- US 6802943 B
- US 4782216 A
- US 3682528 A
- US 6936347 B
- US 6975257 B
- US 6972704 B
- US 6967608 B
- US 6980144 B